(19) Europäisches Patentamt
European Patent Office
Office européen des brevets

(11) **EP 4 496 372 A1**

(12) **EUROPEAN PATENT APPLICATION**
published in accordance with Art. 153(4) EPC

(43) Date of publication:
**22.01.2025 Bulletin 2025/04**

(21) Application number: **23784335.4**

(22) Date of filing: **06.04.2023**

(51) International Patent Classification (IPC):
*H04W 24/02* (2009.01)

(52) Cooperative Patent Classification (CPC):
**H04W 24/02; H04W 28/06; H04W 52/26**

(86) International application number:
**PCT/CN2023/086653**

(87) International publication number:
**WO 2023/193772 (12.10.2023 Gazette 2023/41)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **08.04.2022  CN 202210366508**

(71) Applicant: **Huawei Technologies Co., Ltd.
Shenzhen, Guangdong 518129 (CN)**

(72) Inventors:
• **GONG, Bo**
  **Shenzhen, Guangdong 518129 (CN)**
• **GAN, Ming**
  **Shenzhen, Guangdong 518129 (CN)**
• **YU, Jian**
  **Shenzhen, Guangdong 518129 (CN)**

(74) Representative: **Maiwald GmbH
Engineering
Elisenhof
Elisenstrasse 3
80335 München (DE)**

(54) **COMMUNICATION METHOD, DEVICE AND SYSTEM**

(57)      Embodiments of this application provide a communication method and system, and an apparatus, and relate to the field of communication technologies, so that a process of processing a high-frequency signal is similar to that of processing a low-frequency signal. This reduces complexity of designing a baseband chip compatible with a high frequency and a low frequency. The method includes: obtaining a first carrier spacing, where the first carrier spacing is N times a second carrier spacing corresponding to a first low-frequency channel, and N>1; modulating a to-be-sent high-frequency physical layer signal based on the first carrier spacing, to generate a first PPDU; and sending the first PPDU to a receive device through a first high-frequency channel.

FIG. 4

## Description

This application claims priority to Chinese Patent Application No. 202210366508.8, filed with the China National Intellectual Property Administration on April 8, 2022 and entitled "COMMUNICATION METHOD AND SYSTEM, AND APPARATUS", which is incorporated herein by reference in its entirety.

## TECHNICAL FIELD

Embodiments of this application relate to the field of communication technologies, and in particular, to a communication method and system, and an apparatus.

## BACKGROUND

Development of a wireless local area network (wireless local area network, WLAN) makes wireless communication increasingly popular. Standards formulated by the International Institute of Electrical and Electronics Engineers (IEEE) for the WLAN (namely, the 802.11 protocol suite) are continuously evolved. For example, protocol standards for a low frequency band include 802.11a/g, 802.11n, 802.11ac, 802.11ax, and 802.11be, and supported frequency bands include one or more of 2.4 GHz/5 GHz/6 GHz; and protocol standards for a high frequency band include 802.11aj/ay, and supported frequency bands include one or more of 45 GHz/60 GHz.

Frame structures of physical layer protocol data units (PHY protocol data units, PPDUs) corresponding to the foregoing different protocols are different. In particular, a frame structure of a PPDU corresponding to a protocol for the low frequency band is greatly different from a frame structure of a PPDU corresponding to a protocol for the high frequency band. Therefore, a method for processing a low-frequency signal is also different from a method for processing a high-frequency signal. In this case, hardware for processing the signals (for example, implemented by dedicated circuits in baseband chips) is also greatly different.

In view of this, baseband chips may be respectively designed for the high-frequency signal and the low-frequency signal, but costs are high. It is complex to design a converged baseband chip that can be used to process both the low-frequency signal and the high-frequency signal.

## SUMMARY

Embodiments of this application provide a communication method and system, and an apparatus, so that a process of processing a high-frequency signal is similar to that of processing a low-frequency signal. This reduces complexity of designing a baseband chip compatible with a high frequency and a low frequency.

To achieve the foregoing objectives, the following technical solutions are used in embodiments of this application.

According to a first aspect, an embodiment of this application provides a communication method, applied to a transmit device. The method includes: obtaining a first carrier spacing, where the first carrier spacing is N times a second carrier spacing corresponding to a first low-frequency channel, and N>1; modulating a to-be-sent high-frequency physical layer signal based on the first carrier spacing, to generate a first PPDU; and sending the first PPDU to a receive device through a first high-frequency channel.

In the communication method provided in this embodiment of this application, for the high-frequency channel, in a signal sending process, the carrier spacing corresponding to the high-frequency channel is set to N times (N>1) the carrier spacing corresponding to the low-frequency channel, that is, the high-frequency physical layer signal is obtained by expanding a carrier spacing of a low-frequency physical layer signal. Therefore, a manner of sending the high-frequency physical layer signal is closer to a manner of sending the low-frequency physical layer signal. In addition, a process of processing a digital signal of the high-frequency signal is close to that of the low-frequency signal. This is very friendly in chip design and implementation for a next-generation WLAN protocol that supports both a high frequency band and a low frequency band.

It may be understood that signal modulation is a process in which the transmit device processes information about a signal source, to change the information into a form of a signal suitable for transmission. Modulating a to-be-sent information bit (for example, the high-frequency physical layer signal) includes: In frequency domain, channel encoding and digital modulation, pilot insertion, serial-to-parallel conversion, IDFT, cyclic prefix insertion and windowing, and parallel-to-serial conversion are performed on the to-be-sent information bit, to obtain a digital signal after modulation, and then the digital signal is converted into an analog signal via a digital-to-analog converter (the signal obtained through conversion of the digital-to-analog converter is the first PPDU in this embodiment of this application), where one of parameters of the digital-to-analog converter is a sample rate or the first carrier spacing.

In a possible implementation, the modulating a to-be-sent high-frequency physical layer signal based on the first carrier spacing specifically includes: in a process of modulating the high-frequency physical layer signal based on the first carrier spacing, for data part processing, skipping performing IDFT on the high-frequency physical layer signal, and setting signal values carried on a direct current subcarrier and a guard subcarrier in a signal of an LTF in the first PPDU to non-zero values.

The transmit device modulates data in frequency domain, and then performs IDFT processing. Therefore, the generated PPDU is formed by superimposing a plurality of independent subcarrier signals obtained through modulation. When phases of subcarriers are the same or close to each other, the superimposed signals are modulated based on signals with a same initial phase, to generate a large instantaneous power peak, resulting in a large PAPR. It can be learned that an OFDM system has a disadvantage of a high PAPR, and the high PAPR results in non-linear distortion of a signal, obvious spectrum extension interference, and in-band signal distortion, and deteriorates system performance.

In this embodiment of this application, the transmit device does not perform IDFT processing on a data part, and therefore modulates the data in time domain. In this way, superimposing of subcarriers is avoided, and a PAPR of a signal is low. However, when the transmit device modulates the data in time domain, the receive device needs to perform channel estimation and equalization on the direct current subcarrier and the guard subcarrier. Therefore, in this embodiment of this application, when IDFT processing is not performed on the data part, the signal values carried on the direct current subcarrier and the guard subcarrier in the signal of the LTF are further set to the non-zero values, for example, changed to -1 or 1, so that the receive device can smoothly perform channel estimation and equalization on the direct current subcarrier and the guard subcarrier. Through the foregoing improvement, sending and receiving the high-frequency physical layer signal by using an OFDM technology can be changed to sending and receiving the high-frequency physical layer signal in a single-carrier mode. Therefore, the PAPR can be reduced, and a change to a transmit end and a receive end is very small, which is conducive to chip implementation. It should be understood that, in the single-carrier mode, signal modulation is performed in time domain, and channel estimation and equalization need to be performed on the direct current subcarrier and the guard subcarrier at the receive end.

According to a second aspect, an embodiment of this application provides a communication method, applied to a receive device. The method includes: obtaining a first carrier spacing, where the first carrier spacing is N times a second carrier spacing corresponding to a first low-frequency channel, and N>1; receiving a first PPDU from a transmit device through a first high-frequency channel, where the first PPDU is a high-frequency physical layer signal; and demodulating the first PPDU based on the first carrier spacing.

Refer to the descriptions of the technical effect of the technical solutions in the first aspect. For the high-frequency channel, in a signal sending process, the carrier spacing corresponding to the high-frequency channel is set to N times (N>1) the carrier spacing corresponding to the low-frequency channel, that is, the high-frequency physical layer signal is obtained by expanding a carrier spacing of a low-frequency physical layer signal. Therefore, a manner of sending the high-frequency physical layer signal is closer to a manner of sending the low-frequency physical layer signal. Correspondingly, a manner of receiving the high-frequency physical layer signal is closer to a manner of receiving the low-frequency physical layer signal. In addition, a process of processing a digital signal of the high-frequency signal is close to that of the low-frequency signal. This is very friendly in chip design and implementation for a next-generation WLAN protocol that supports both a high frequency band and a low frequency band.

It may be understood that signal demodulation is a process of extracting the information about the signal source from a received signal. The signal demodulation process includes analog-to-digital conversion, serial-to-parallel conversion, cyclic prefix removal, DFT, residual frequency offset and phase noise processing (that is, pilot signal processing), channel equalization, parallel-to-serial conversion, and digital demodulation and channel decoding. After receiving the signal (analog signal), the receive device converts the analog signal into a digital signal via the analog-to-digital converter. Similar to that of the transmit device, one of parameters of the analog-to-digital converter is a sample rate or the first carrier spacing.

In a possible implementation, in a process of modulating the signal by the transmit device, for data part processing, no inverse discrete Fourier transform IDFT is performed on the high-frequency physical layer signal, and signal values carried on a direct current subcarrier and a guard subcarrier in a signal of an LTF in the first PPDU are non-zero values.

In a possible implementation, the demodulating the first PPDU based on the first carrier spacing specifically includes: converting the first PPDU from an analog signal into a digital signal based on the first carrier spacing; converting a signal of a data field in the first PPDU from a time domain signal into a frequency domain signal; performing equalization processing on the signal of the data field in the first PPDU; then converting a signal, obtained through equalization processing, of the data field in the first PPDU from a frequency domain signal into a time domain signal; and further processing a pilot signal of the data field in the first PPDU.

For the receive device, originally, pilot signal processing (pilot signal processing includes residual frequency offset processing and phase noise processing) is further included after DFT processing and before channel equalization; and when IDFT processing is removed for the transmit device, the receive device performs IDFT processing after channel equalization to obtain the time domain signal, and then the receive device processes the pilot signal.

According to a third aspect, an embodiment of this application provides a transmit device, including an obtaining module, a modulation module, and a sending module. The obtaining module is configured to obtain a first carrier spacing, where the first carrier spacing is N times a second carrier spacing corresponding to a first low-frequency channel, and N>1. The modulation module is configured to modulate a to-be-sent high-frequency physical layer signal based on the first carrier spacing, to generate a first PPDU. The sending module is configured to send the first PPDU to a receive device through a first high-frequency channel.

In a possible implementation, the transmit device provided in this embodiment of this application further includes a control module. The control module is configured to control the modulation module to: in a process of modulating the high-frequency physical layer signal based on the first carrier spacing, skip performing IDFT on the high-frequency physical layer signal, and set signal values carried on a direct current subcarrier and a guard subcarrier in a signal of an LTF in the first PPDU to non-zero values.

According to a fourth aspect, an embodiment of this application provides a receive device, including an obtaining module, a receiving module, and a demodulation module. The obtaining module is configured to obtain a first carrier spacing, where the first carrier spacing is N times a second carrier spacing corresponding to a first low-frequency channel, and N>1. The receiving module is configured to receive a first PPDU from a transmit device through a first high-frequency channel, where the first PPDU is a high-frequency physical layer signal. The demodulation module is configured to demodulate the first PPDU based on the first carrier spacing.

In a possible implementation, the demodulation module is specifically configured to: convert the first PPDU from an analog signal into a digital signal based on the first carrier spacing; convert a signal of a data field in the first PPDU from a time domain signal into a frequency domain signal; perform equalization processing on the signal of the data field in the first PPDU; then convert a signal, obtained through equalization processing, of the data field in the first PPDU from a frequency domain signal into a time domain signal; and further process a pilot signal of the data field in the first PPDU.

For the first aspect to the fourth aspect, in a possible implementation, a value range of the first carrier spacing includes any one of the following: [3.55 MHz, 4.03 MHz], [7.11 MHz, 8.05 MHz], [3.46 MHz, 3.92 MHz], [6.92 MHz, 7.85 MHz], [3.31 MHz, 3.75 MHz], [6.61 MHz, 7.5 MHz], [3.23 MHz, 3.67 MHz], [3.313 MHz, 3.755 MHz], [7.19 MHz, 7.98 MHz], [7.36 MHz, 8.18 MHz], [3.6 MHz, 4 MHz], [7.79 MHz, 8.59 MHz], or [3.85 MHz, 4.25 MHz], where MHz represents megabyte, and is a unit of the first carrier spacing.

In this embodiment of this application, when channel bandwidths of the high-frequency channel are respectively 270 MHz, 540 MHz, 1080 MHz, 2160 MHz, 4320 MHz, and 8640 MHz, and in the channel bandwidth of the high-frequency channel, a range of a proportion of a high-frequency effective bandwidth may be 0.75 to 0.85, the value ranges of the first carrier spacing are respectively obtained by extending different carrier spacings of the low-frequency channel. It may be understood that an effective bandwidth, a quantity of effective subcarriers, and a subcarrier spacing satisfy: Effective bandwidth=quantity of effective subcarriers×subcarrier spacing.

When a quantity of effective subcarriers corresponding to the high-frequency channel is the same as a quantity of effective subcarriers corresponding to the low-frequency channel, a manner of processing a signal sent on the high-frequency channel is similar to a manner of processing a signal sent on the low-frequency channel. Therefore, to ensure that a manner of processing a high-frequency signal is the same as a manner of processing a low-frequency signal, the quantity of effective subcarriers corresponding to the first low-frequency channel is used as a quantity of effective subcarriers of the first high-frequency channel, and then the first carrier spacing is calculated according to the foregoing formula of a relationship between the effective bandwidth, the quantity of effective subcarriers, and the subcarrier spacing, where the first carrier spacing is a ratio of the high-frequency effective bandwidth to the quantity of effective subcarriers corresponding to the first low-frequency channel.

For the first aspect to the fourth aspect, in a possible implementation, a value of the first carrier spacing includes any one of the following: 3.75 MHz, 7.8125 MHz, 3.5156 MHz, 7.03125 MHz, 7.93 MHz, 3.91 MHz, 8.2 MHz, or 4.05 MHz. The value of the first carrier spacing is a value obtained when a sample rate of the high-frequency signal is M times (M is a positive integer greater than 1) a minimum sample rate of a low-frequency signal. In each WLAN protocol for a low frequency provided in this embodiment of this application, a minimum sample rate is 20 MHz.

In this embodiment of this application, when a sample rate of a high-frequency signal is an integer multiple (M times) of a minimum sample rate of a low-frequency signal, a sampling clock frequency (the sample rate is the sampling clock frequency) corresponding to the high-frequency signal and a sampling clock frequency corresponding to the low-frequency signal may be implemented based on same hardware (a crystal oscillator combined with a phase-locked loop). This can reduce complexity of designing a baseband chip compatible with a high frequency and a low frequency.

For the first aspect to the fourth aspect, in a possible implementation, in the signal of the LTF, signal values whose indexes are -32, -31, -30, -29, 0, 29, 30, and 31 are successively - 1, 1, 1, 1, -1, -1, 1, and 1; or

in the signal of the LTF, signal values whose indexes are -64, -63, -62, -61, -60, -59, -1, 0, 1, 59, 60, 61, 62, and 63 are successively -1, 1, 1, -1, 1, 1, 1, -1, 1, -1, -1, 1, -1, and 1; or
in the signal of the LTF, signal values whose indexes are -128, -127, -126, -125, -124, -123, -1, 0, 1, 123, 124, 125, 126, and 127 are successively -1, -1, -1, 1, 1, 1, -1, -1, 1, -1, -1, 1, 1, and 1; or

in the signal of the LTF, signal values whose indexes are -128, -127, -126, -125, -124, -123, -1, 0, 1, 123, 124, 125, 126, and 127 are successively -1, -1, 1, 1, 1, -1, -1, 1, -1, -1, 1, 1, 1, and -1; or

in the signal of the LTF, signal values whose indexes are -256, -255, -254, -253, -252, -251, -129, -128, -127, -5, -4, -3, -2, -1, 0, 1, 2, 3, 4, 5, 127, 128, 129, 251, 252, 253, 254, and 255 are successively -1, -1, 1, 1, 1, 1, 1, 1, -1, 1, -1, 1, 1, 1, -1, -1, -1, -1, -1, 1, -1, 1, -1, 1, 1, 1, 1, and 1; or

in the signal of the LTF, signal values whose indexes are -256, -255, -254, -253, -252, -251, -250, -249, -248, -247, -246, -245, -2, -1, 0, 1, 2, 245, 246, 247, 248, 249, 250, 251, 252, 253, 254, and 255 are successively -1, 1, -1, -1, 1, -1, -1, -1, -1, -1, 1, 1, -1, -1, -1, 1, 1, -1, - 1, -1, 1, -1, -1, -1, -1, -1, 1, and 1; or

in the signals of the LTF, signal values whose indexes are -512, -511, -510, -509, - 508, -507, -506, -505, -504, -503, -502, -501, -2, -1, 0, 1, 2, 501, 502, 503, 504, 505, 506, 507, 508, 509, 510, and 511 are successively 1, 1, 1, -1, -1, -1, -1, 1, 1, 1, 1, -1, -1, -1, 1, -1, -1, -1, -1, 1, -1, 1, 1, -1, 1, 1, -1, and -1.

In this embodiment of this application, some signal values in the LTF are changed, so that a requirement for channel estimation and equalization in the single-carrier mode can be met, and a change of the PAPR of the LTF may be unobvious. It should be understood that a PAPR of the data part is very high, which is a bottleneck of the PAPR of the entire PPDU. In this embodiment of this application, after the carrier spacing corresponding to the first high-frequency channel (namely, the first carrier spacing) is obtained by extending the carrier spacing corresponding to the first low-frequency channel (namely, the second carrier spacing), and in the data generation process of the data part on the transmit device side, IDFT processing is removed and some signal values of the LTF are changed, a PAPR of a data part obtained through change is significantly reduced in comparison with the PAPR of the data part in the first low-frequency channel (this is because a PAPR of a signal obtained through single-carrier time-domain modulation is very low). This greatly reduces a requirement of the transmit end for a component. In addition, compared with the PAPR of the LTF in the first low-frequency channel, the PAPR of the LTF obtained through change does not change significantly, that is, it can be ensured that the LTF obtained through change does not obviously increase the PAPR of the system.

For the first aspect to the fourth aspect, in a possible implementation, the first carrier spacing is determined in the following manner: determining a high-frequency effective bandwidth in a channel bandwidth of the first high-frequency channel, where the high-frequency effective bandwidth includes a bandwidth corresponding to a data subcarrier, a bandwidth corresponding to a pilot subcarrier, and a bandwidth corresponding to a direct current subcarrier; and determining the first carrier spacing based on the high-frequency effective bandwidth and a quantity of effective subcarriers corresponding to a channel bandwidth of the first low-frequency channel. The effective subcarrier includes a data subcarrier, a pilot subcarrier, and a direct current subcarrier. Similarly, the high-frequency effective bandwidth in the channel bandwidth of the first high-frequency channel includes the bandwidth corresponding to the data subcarrier, the bandwidth corresponding to the pilot subcarrier, and the bandwidth corresponding to the direct current subcarrier in the channel bandwidth of the first high-frequency channel.

For the first aspect to the fourth aspect, in a possible implementation, the first carrier spacing is determined in the following manner: determining, based on a channel bandwidth of the first high-frequency channel and a channel bandwidth of the first low-frequency channel, a sample rate of a signal carried on the first high-frequency channel, where the sample rate is M times a minimum sample rate of a signal carried on the first low-frequency channel, and M is a positive integer greater than 1; and determining the first carrier spacing based on the sample rate and a DFT size of the first PPDU. In this embodiment of this application, when the sample rate of the high-frequency signal is an integer multiple (M times) of the minimum sample rate of the low-frequency signal, because a sampling clock is usually implemented by a crystal oscillator combined with a phase-locked loop in terms of hardware, it is easier to reuse the sampling clock for sending the high-frequency signal and sending the low-frequency signal.

For the first aspect to the fourth aspect, in a possible implementation, the determining, based on a channel bandwidth of the first high-frequency channel and a channel bandwidth of the first low-frequency channel, a sample rate of a signal carried on the first high-frequency channel specifically includes: determining a high-frequency effective bandwidth in the channel bandwidth of the first high-frequency channel, where the high-frequency effective bandwidth includes a bandwidth corresponding to a data subcarrier, a bandwidth corresponding to a pilot subcarrier, and a bandwidth corresponding to a direct current subcarrier; and determining, based on the high-frequency effective bandwidth, a quantity of effective subcarriers corresponding to the channel bandwidth of the first low-frequency channel, and the DFT size of the first PPDU, the sample rate of the signal carried on the first high-frequency channel. In this embodiment of this application, the sample rate satisfies the following formula: Sample rate=carrier spacing×DFT size.

According to a fifth aspect, an embodiment of this application provides a transmit device, including a memory and at least one processor connected to the memory. The memory is configured to store instructions, and after the instructions are read by the at least one processor, the method in any one of the first aspect and the possible implementations of the first aspect is performed.

According to a sixth aspect, an embodiment of this application provides a computer-readable storage medium. The computer-readable storage medium stores a computer program, and the computer program is executed by a processor, to implement the method in any one of the first aspect and the possible implementations of the first aspect.

According to a seventh aspect, an embodiment of this application provides a computer program product. The computer program product includes instructions, and when the computer program product runs on a computer, the method in any one of the first aspect and the possible implementations of the first aspect is performed.

According to an eighth aspect, an embodiment of this application provides a chip, including a memory and a processor. The memory is configured to store computer instructions. The processor is configured to invoke the computer instructions from the memory and run the computer instructions, to perform the method in any one of the first aspect and the possible implementations of the first aspect.

According to a ninth aspect, an embodiment of this application provides a receive device, including a memory and at least one processor connected to the memory. The memory is configured to store instructions, and after the instructions are read by the at least one processor, the method in any one of the second aspect and the possible implementations of the second aspect is performed.

According to a tenth aspect, an embodiment of this application provides a computer-readable storage medium. The computer-readable storage medium stores a computer program, and the computer program is executed by a processor, to implement the method in any one of the second aspect and the possible implementations of the second aspect.

According to an eleventh aspect, an embodiment of this application provides a computer program product. The computer program product includes instructions, and when the computer program product runs on a computer, the method in any one of the second aspect and the possible implementations of the second aspect is performed.

According to a twelfth aspect, an embodiment of this application provides a chip, including a memory and a processor. The memory is configured to store computer instructions. The processor is configured to invoke the computer instructions from the memory and run the computer instructions, to perform the method in any one of the second aspect and the possible implementations of the second aspect.

According to a thirteenth aspect, an embodiment of this application provides a communication system, including the transmit device in the third aspect or the fifth aspect and the receive device in the fourth aspect or the ninth aspect.

It should be understood that, for beneficial effect achieved by the technical solutions in the second aspect to the thirteenth aspect and the corresponding possible implementations in embodiments of this application, refer to the foregoing technical effect in the first aspect or the second aspect and the corresponding possible implementations thereof. Details are not described herein again.

## BRIEF DESCRIPTION OF DRAWINGS

FIG. 1 is a diagram of frame structures of PPDUs in different WLAN protocols according to an embodiment of this application;
FIG. 2 is a diagram of an architecture of a wireless communication system according to an embodiment of this application;
FIG. 3 is a diagram of hardware of an electronic device according to an embodiment of this application;
FIG. 4 is a diagram 1 of a communication method according to an embodiment of this application;
FIG. 5 is a diagram 2 of a communication method according to an embodiment of this application;
FIG. 6 is a diagram 3 of a communication method according to an embodiment of this application;
FIG. 7 is a diagram of a signal modulation framework based on an OFDM technology according to an embodiment of this application;
FIG. 8 is a diagram of a signal modulation framework according to an embodiment of this application;
FIG. 9 is a diagram 1 of a structure of a transmit device according to an embodiment of this application;
FIG. 10 is a diagram 2 of a structure of a transmit device according to an embodiment of this application;
FIG. 11 is a diagram 1 of a structure of a receive device according to an embodiment of this application; and
FIG. 12 is a diagram 2 of a structure of a receive device according to an embodiment of this application.

## DESCRIPTION OF EMBODIMENTS

The term "and/or" in this specification describes only an association relationship for associated objects and indicates that three relationships may exist. For example, A and/or B may indicate the following three cases: Only A exists, both A and B exist, and only B exists.

In the specification and claims of embodiments of this application, the terms "first", "second", and the like are intended to distinguish between different objects but do not indicate a particular order of the objects. For example, a first carrier spacing, a second carrier spacing, and the like are used to distinguish between different carrier spacings, but are not used to describe a particular order of the carrier spacings.

In embodiments of this application, the word "example", "for example", or the like is used to represent giving an example, an illustration, or a description. Any embodiment or design scheme described as an "example" or "for example" in embodiments of this application should not be explained as having more advantages than another embodiment or design scheme. Exactly, use of the word "example", "for example", or the like is intended to present a related concept in a specific manner.

In descriptions of embodiments of this application, "a plurality of" means two or more, unless otherwise specified. For example, a plurality of stations (STAs) means two or more stations.

First, some concepts related to a communication method and system, and an apparatus provided in embodiments of this application are described.

(1) Development of wireless local area network WLAN protocol standards

With development of WLAN protocol standards (the 802.11 protocol suite), the WLAN protocol standards support larger bandwidths (from 20 MHz to 320 MHz) and higher and more frequency bands, and spectral efficiency and a throughput are continuously improved. The 802.11 protocol suite is divided into a protocol for a low frequency band and a protocol for a high frequency band.

For example, for some protocols proposed for a low frequency band, supported maximum rates, and supported frequency bands, refer to Table 1.

**Table 1**

| Protocol name | Supported frequency band | Maximum rate |
|---|---|---|
| 802.11 | 2.4 GHz | 2 Mbps |
| 802.11b | 2.4 GHz | 11 Mbps |
| 802.11a | 5 GHz | 54 Mbps |
| 802.11g | 2.4 GHz | 54 Mbps |
| 802.11n | 2.4 GHz and 5 GHz | 600 Mbps |
| 802.11ac | 5 GHz | 1300 Mbps |
| 802.11ax | 2.4 GHz and 5 GHz | 10 Gbps |
| 802.11be | 2.4 GHz, 5 GHz, and 6 GHz | 30 Gbps |

For example, for some protocols proposed for a high frequency band, supported maximum rates, and supported frequency bands, refer to Table 2.

**Table 2**

| Protocol name | Supported frequency band | Maximum rate |
|---|---|---|
| 802.11 aj | 45 GHz | 7 Gbps |
| 802.11 ay | 60 GHz | 176 Gbps |

WLAN technologies will further develop continuously. A research direction of a next-generation WLAN technology is to further improve a physical layer capability, so as to support signal sending in both a high frequency band and a low frequency band.

(2) Orthogonal frequency division multiplexing (Orthogonal frequency division multiplexing, OFDM) technology

The OFDM technology is a basic transmission manner of current wireless communication, and is widely applied to wireless communication systems such as a long term evolution (long term evolution, LTE) system, a worldwide interoperability for microwave access (worldwide interoperability for microwave access, WiMAX) system, and a Wi-Fi system. A basic principle of the OFDM technology is that, in an allowable range of subcarrier orthogonality, a signal is divided into N subsignals, and then N orthogonal subcarriers are modulated based on the N subsignals respectively. Because spectra of the subcarriers overlap, high spectral efficiency can be obtained. In addition, a subcarrier spacing is compressed to minimum by using the OFDM technology. This can ensure that a plurality of parallel paths that do not interfere with each other are formed.

An essence of the OFDM technology is as follows: At a transmit end, serial-to-parallel conversion and IFFT are sequentially performed on a to-be-sent signal, then parallel data is converted into serial data, and a guard band (also referred to as a "cyclic prefix") is added, to form an OFDM symbol. It may be understood that, in a WLAN technology, a subcarrier of an OFDM symbol may include a guard subcarrier, a direct current subcarrier, a data subcarrier, and a pilot subcarrier. The guard subcarrier and the direct current subcarrier do not carry a signal. It may also be considered that signal values carried on the guard subcarrier and the direct current subcarrier are 0. The data subcarrier is used to carry payload information. The pilot subcarrier is used to carry a pilot signal, a value of the pilot signal is usually 1 or -1, and the pilot signal is used to estimate a residual frequency offset and phase noise.

It should be understood that, at a physical layer, a physical layer protocol data unit (PPDU) is generated after encoding, modulation, and other processing are performed on the to-be-sent signal. Frame structures of PPDUs in different WLAN protocols are different.

(3) Frame structures of PPDUs in different protocols

The following describes several frame structures of PPDUs corresponding to protocols for a low frequency band.

1). Frame structure of a PPDU in a high throughput (high throughput, HT) mode in 802.11n

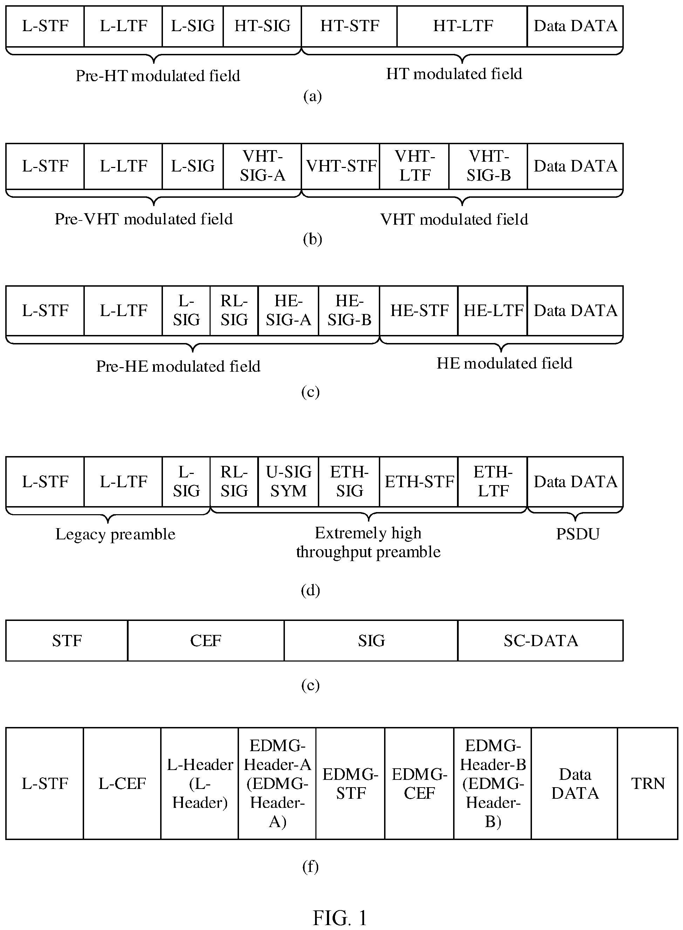

Refer to (a) in FIG. 1. A PPDU is divided into two parts. One part is a part compatible with a legacy frame, and may be referred to as a pre-HT modulated field (collectively referred to as the pre-HT modulated field below), and the other part is a modulated field corresponding to the HT mode (collectively referred to as an HT modulated field). As shown in (a) in FIG. 1, the pre-HT modulated field includes an L-STF, an L-LTF (the L-STF and the L-LTF are legacy preambles), an L-SIG (legacy signal), and an HT-SIG (HT signal). The HT modulated field includes a high throughput short training field (high throughput short training field, HT-STF), a high throughput long training field (high throughput long training field, HT-LTF), and a data (data) field.

2). Frame structure of a PPDU in a very high throughput (very high throughput, VHT) mode in 802.11ac

Refer to (b) in FIG. 1. Similar to that in 802.11n, the PPDU is divided into two parts. One part is a part compatible with a legacy frame, and may be referred to as a pre-VHT modulated field (collectively referred to as the pre-VHT modulated field below), and the other part is a modulated field corresponding to the VHT mode (collectively referred to as a VHT modulated field). As shown in (b) in FIG. 1, the pre-VHT modulated field includes an L-STF, an L-LTF (the L-STF and the L-LTF are legacy preambles), an L-SIG (legacy signal), and a VHT-SIG-A (VHT signal A) field. The VHT modulated field includes a very high throughput short training field (very high throughput short training field, VHT-STF), a very high throughput long training field (very high throughput long training field, VHT-LTF), a VHT-SIG-B field (VHT signal B field), and a data (DATA) field.

3). Frame structure of a PPDU in a high efficiency (high efficiency, HE) mode in 802.11 ax

Refer to (c) in FIG. 1. A PPDU is divided into two parts. One part is a part compatible with a legacy frame, and may be referred to as a pre-HE modulated field (collectively referred to as the pre-HE modulated field below), and the other part is a modulated field corresponding to the HE mode (collectively referred to as an HE modulated field). As shown in (c) in FIG. 1, the pre-HE modulated field includes an L-STF, an L-LTF (the L-STF and the L-LTF are legacy preambles), an L-SIG, an RL-SIG (repeated legacy signal, RL-SIG), an HE-SIG-A (HE signal A) field and an HE-SIG-B (HE signal B) field; and the HE modulated field includes a high efficiency short training field (high efficiency short training field, HE-STF), a high efficiency long training field (high efficiency long training field, HE-LTF), and a data (data) field.

4). Frame structure of a PPDU in an extremely high efficiency (extremely high throughput, EHT) mode in 802.11be

Refer to (d) in FIG. 1. A PPDU includes a legacy preamble (legacy preamble, L-preamble), an extremely high throughput preamble (EHT-preamble), and a physical layer convergence service data unit (physical layer convergence protocol service data unit, PSDU), where the L-preamble includes an L-STF field, an L-LTF field, and an L-SIG field; the EHT-preamble includes an RL-SIG field, a U-SIG (universal SIG, universal signal) field, an EHT-SIG field, an EHT-STF field, and an EHT-LTF field; and the PSDU includes a data field.

It may be understood that 802.11n, 802.11ac, 802.11ax, and 802.11be are all WLAN protocols based on an OFDM technology.

The following describes several frame structures of PPDUs corresponding to protocols for a high frequency band.

## 1. Frame structure of a PPDU corresponding to 802.11aj

The PPDU corresponding to 802.11aj is also referred to as a China millimeter-wave multi-gigabit (China millimeter-wave multi-gigabit, CMMG) PPDU.

A format of a PPDU at a channel bandwidth of 540 MHz in a single-carrier (SC) mode is shown in (e) in FIG. 1. The CMMG PPDU includes an STF, a channel estimation field (channel estimation field, CEF), an SIG field, and an SC-DATA field.

## 2. Frame structure of a PPDU corresponding to 802.11ay

The PPDU corresponding to 802.11ay may also be referred to as an enhanced directional multi-gigabit (enhanced directional multi-gigabit, EDMG) PPDU.

Refer to (f) in FIG. 1. An EDMG PPDU includes an L-STF field, an L-CEF field, an L-Header (for signaling indication) field, an EDMG-Header-A field, an EDMG-STF field, an EDMG-CEF field, an EDMG-Header-B field, a DATA field, and a TRN (for beam alignment and tracking) field.

It may be understood that 802.11aj and 802.11ay are WLAN protocols based on the single-carrier mode. An OFDM-based protocol and a protocol based on the single-carrier mode are greatly different from each other in preamble structures, signaling indication, and signal processing.

For detailed descriptions of fields in PPDUs corresponding to various protocols, refer to existing protocol content. Details are not described one by one in embodiments of this application. It should be noted that, in embodiments of this application, an LTF (for example, an HT-LTF, a VHT-LTF, an HE-LTF, or an EHT-LTF) in a modulated field is adjusted. Therefore, only the LTF field is briefly described. The LTF field in the modulated field is used for channel estimation, and a signal sent by a transmit end may be obtained through parsing based on a channel estimation result. The LTF field is an LTF sequence (a sequence including 0, 1, and -1), and the LTF sequence includes values carried on subcarriers. It should be understood that one subcarrier corresponds to one value in the LTF sequence (one value in the LTF sequence may be referred to as one signal of the LTF).

In embodiments of this application, different bandwidths correspond to different LTF sequences, and the LTF sequences may include a 1x sequence, a 2x sequence, and a 4x sequence. There are at least three zeros between two non-zero elements (an element is a signal of the LTF) in the 1x sequence, there is at least one zero between two non-zero elements in the 2x sequence, and there are consecutive non-zero values in the 4x sequence. Because non-zero elements in the 4x sequence are dense, accuracy of channel estimation performed based on the 4x sequence is high.

A $k^{th}$ element in an LTF sequence is denoted as $LTF_k$, a signal received by a receive end through a channel is denoted as Y, a signal received through a channel corresponding to a $k^{th}$ subcarrier is denoted as $Y_k$, a channel between the transmit end and the receive end is denoted as H, and the channel corresponding to the $k^{th}$ subcarrier is denoted as $H_k$. Channel estimation is performed via a matrix P (the matrix P is an orthogonal matrix) corresponding to a data subcarrier. In this case, a principle of channel estimation performed based on the LTF sequence is as follows:

$$Y_k = H_k \times P_{m,n} \times LTF_k$$

It should be noted that a size of the matrix P is M×N, M represents a quantity of data streams, N represents a quantity of OFDM symbols, corresponding to an LTF, for one data stream, $m \in [1, M]$, $n \in [1, N]$, m represents an $m^{th}$ data stream, and n represents an $n^{th}$ OFDM symbol.

Therefore, the channel $H_k$ corresponding to the $k^{th}$ subcarrier may be deduced as follows:

$$H_k = Y_k \times P_{m,n}^{*} / (LTF_k)$$

$P_{m,n}^{*}$ represents conjugate transpose of $P_{m,n}$

## (4) Peak to average power ratio

The peak to average power ratio (peak to average power ratio, PAPR), referred to as a peak-to-average ratio for short, is a ratio of an instantaneous power peak of a signal to an average signal power for a signal sequence, and may be represented according to the following formula:

$$PAPR = 10 \cdot \log_{10} \left( \frac{\max(X_i^2)}{mean(X_i^2)} \right)$$

X, represents a time domain discrete value of a signal in the signal sequence; $\max(X_i^2)$ represents a maximum value of a square of the time domain discrete value in the signal sequence, namely, the instantaneous power peak of the signal; and $mean(X_i^2)$ represents an average value of squares of the time domain discrete values, namely, the average signal power.

It can be learned from the foregoing content that because signal (SC or OFDM) modes of physical layer protocol data units (PHY protocol data units, PPDUs) corresponding to a high frequency band and a low frequency band are different, preamble structures, signaling indication, and data signal generation processes of the PPDUs are different. Therefore, a method for processing a low-frequency signal is also different from a method for processing a high-frequency signal. In this case, hardware for processing the signals (for example, dedicated circuits in baseband chips) is also greatly different. Currently, baseband chips may be respectively designed for the high-frequency signal and the low-frequency signal, but costs of chip design, development, debugging, and testing are high. Alternatively, a converged baseband chip that can be used to process both the low-frequency signal and the high-frequency signal is designed. However, this manner is complex.

For problems described in the background, embodiments of this application provide a communication method, so that a process of processing a high-frequency signal is similar to that of processing a low-frequency signal. This reduces complexity of designing a baseband chip compatible with a high frequency and a low frequency. Specifically, for a high frequency channel, in a signal sending process, a carrier spacing corresponding to the high-frequency channel is set to N times (N>1) a carrier spacing corresponding to a low-frequency channel. That is, a high-frequency physical layer signal is obtained by extending a carrier spacing of a low-frequency physical layer signal. Therefore, a manner of sending the high-frequency physical layer signal is closer to a manner of sending the low-frequency physical layer signal. This reduces the complexity of designing the baseband chip compatible with the high frequency and the low frequency.

The communication method provided in embodiments of this application may be applied to a wireless communication system in which a transmit device communicates with a receive device. The transmit device modulates a to-be-sent high-frequency physical layer signal based on an obtained first carrier spacing (obtained by extending a second carrier spacing corresponding to a low-frequency channel), to generate a first PPDU, and sends the first PPDU to the receive device. Correspondingly, the receive device obtains the first carrier spacing, and demodulates the first PPDU based on the first carrier spacing, to obtain the high-frequency physical layer signal.

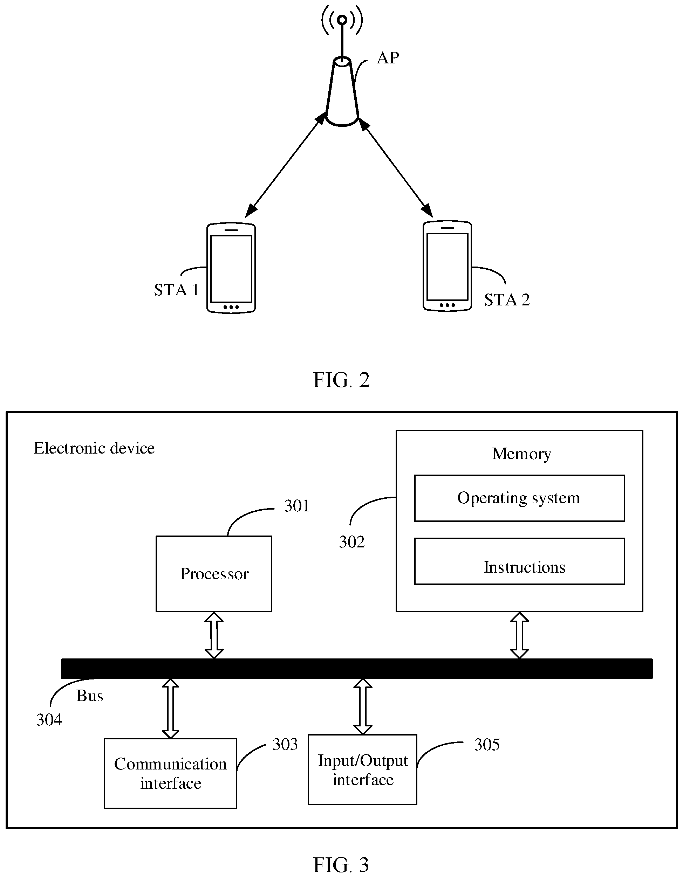

For example, the wireless communication system may be a Wi-Fi wireless communication system. Refer to FIG. 2. The wireless communication system includes an access point (access point, AP) and one or more stations (stations, STAs). In FIG. 2, two STAs: a STA 1 and a STA 2 are separately included. The transmit device may be an AP or a STA, and the receive device may also be an AP or a STA. For example, when the transmit device is an AP, the receive device is a STA; or when the transmit device is a STA, the receive device is an AP. In other words, a device in the wireless communication system may be used as a transmit device or a receive device.

For example, in embodiments of this application, both the AP and the STA include but are not limited to devices such as a server, a router, a switch, a bridge, a computer, and a mobile phone.

The communication method provided in embodiments of this application may be performed by a communication apparatus. The communication apparatus has a function of performing the technical solutions of this application. The communication apparatus may be one of the foregoing devices such as the server, the router, the switch, the bridge, the computer, and the mobile phone. Alternatively, the communication apparatus may be one or more functional modules in the foregoing device, and the functional module may be an element in a hardware device, or may be software running on dedicated hardware, or a combination of hardware and software. Optionally, the communication apparatus may be implemented by one device, or may be implemented by a plurality of devices. This is not specifically limited in embodiments of this application.

For example, related functions of the communication apparatus in embodiments of this application may be implemented by an electronic device in FIG. 3. Refer to FIG. 3. A hardware structure of an electronic device provided in this application is described. It should be understood that the electronic device shown in FIG. 3 is merely an example of the electronic device, and the electronic device may have more or fewer components than those shown in the figure, or may combine two or more components, or may have different component configurations. Various components shown in FIG. 3 may be implemented in hardware including one or more signal processing and/or application-specific integrated circuits, software, or a combination of hardware and software.

As shown in FIG. 3, the electronic device provided in an embodiment of this application may include a processor 301, and may further include a memory 302 and a communication interface 303. The processor 301, the memory 302, and the communication interface 303 may be connected to each other through a bus 304, or may be connected to each other in another manner.

The processor 301 is a control center of the electronic device. The processor 301 may be a general-purpose central processing unit (central processing unit, CPU), another general-purpose processor, or the like. The general-purpose processor may be a microprocessor, any conventional processor, or the like. The processor 301 may include one or more processing units. For example, the processor 301 may include an application processor (application processor, AP), a graphics processing unit (graphics processing unit, GPU), an image signal processor (image signal processor, ISP), a controller, a memory, or the like. Different processing units may be independent devices, or may be integrated into one or more processors. For example, in this embodiment of this application, the processor 301 may parse signaling information, process related data, and the like.

A controller in the processor 301 is a nerve center and a command center of the electronic device. The controller may generate an operation control signal based on instruction operation code and a time sequence signal, to complete control of instruction reading and instruction execution. A memory may be further disposed in the processor 301, and is configured to store instructions and data.

The memory 302 in the electronic device includes but is not limited to a random access memory (random access memory, RAM), a read-only memory (read-only memory, ROM), an erasable programmable read-only memory (erasable programmable read-only memory, EPROM), a flash memory, an optical memory, a magnetic disk storage medium, another magnetic storage device, or any other medium that can carry or store expected program code in an instruction form or in a data structure form and that can be accessed by a computer. In this embodiment of this application, the memory 302 may store signaling information, some predetermined preset values, and the like.

In a possible implementation, the memory 302 may be independent of the processor 301. The memory 302 may be connected to the processor 301 through the bus 304, and is configured to store data, instructions, or program code. When invoking and executing the instructions or program code stored in the memory 302, the processor 301 can implement the communication method provided in embodiments of this application.

The communication interface 303 may be a transceiver module, and is configured to communicate with another device or a communication network, for example, an ethernet, a RAN, or a wireless local area network (wireless local area network, WLAN). The communication interface 303 may receive instructions, a message, data, or the like. The transceiver module may be an apparatus such as a transceiver or a transceiver machine. The transceiver includes a transmitter and a receiver. In this embodiment of this application, the transmitter is configured to send a first PPDU, and the receiver is configured to receive the first PPDU. Optionally, the communication interface 303 may alternatively be a transceiver circuit located in the processor 301, and is configured to implement signal input and signal output of the processor. The communication interface 303 is a wireless interface.

Optionally, the electronic device in this embodiment of this application may further include an input/output interface 305. The input/output interface 305 is configured to connect to an input device and receive information entered by a user via the input device. The input device includes but is not limited to a keyboard, a touchscreen, and a microphone. The input/output interface 305 is further configured to connect to an output device and output a processing result of the processor 301. The output device includes but is not limited to a display and a printer.

The bus 304 may be an industry standard architecture (industry standard architecture, ISA) bus, a peripheral component interconnect (peripheral component interconnect, PCI) bus, an extended industry standard architecture (extended industry standard architecture, EISA) bus, or the like. The bus may be classified into an address bus, a data bus, a control bus, or the like. For ease of representation, only one thick line is used to represent the bus in FIG. 3, but this does not indicate that there is only one bus or only one type of bus.

The following describes a communication method and system, and an apparatus provided in embodiments of this application with reference to accompanying drawings.

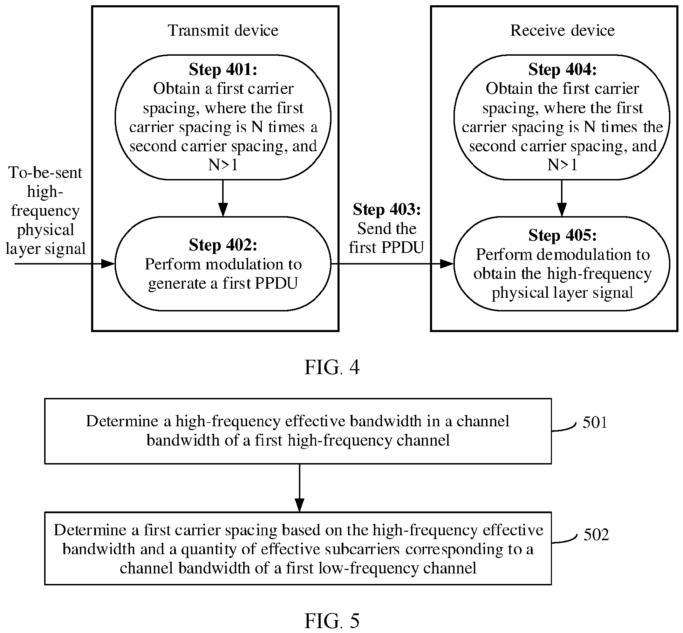

Based on the content described in the foregoing embodiment, the communication method provided in embodiments of this application is described from a perspective of interaction between a transmit device and a receive device. As shown in FIG. 4, the method includes the following steps.

Step 401: The transmit device obtains a first carrier spacing, where the first carrier spacing is N times a second carrier spacing corresponding to a first low-frequency channel, and N> 1.

In this embodiment of this application, the transmit device obtains the first carrier spacing, to send a high-frequency physical layer signal based on the first carrier spacing. The high-frequency physical layer signal is sent through a high-frequency channel (in the following embodiment, the high-frequency channel is referred to as a first high-frequency channel).

It may be understood that, in this embodiment of this application, a frequency band of the first low-frequency channel includes one of 2.4 GHz, 5 GHz, or 6 GHz, that is, some frequency bands supported by an 802.11 protocol for a low frequency described in the foregoing embodiment; and a frequency band of the first high-frequency channel includes either 45 GHz or 60 GHz, that is, some frequency bands supported by an 802.11 protocol for a high frequency described in the foregoing embodiment.

Optionally, a value range of the first carrier spacing in this embodiment of this application includes any one of the following: [3.55 MHz, 4.03 MHz], [7.11 MHz, 8.05 MHz], [3.46 MHz, 3.92 MHz], [6.92 MHz, 7.85 MHz], [3.31 MHz, 3.75 MHz], [6.61 MHz, 7.5 MHz], [3.23 MHz, 3.67 MHz], [3.313 MHz, 3.755 MHz], [7.19 MHz, 7.98 MHz], [7.36 MHz, 8.18 MHz], [3.6 MHz, 4 MHz], [7.79 MHz, 8.59 MHz], or [3.85 MHz, 4.25 MHz], where MHz represents megabyte, and is a unit of the first carrier spacing.

The first carrier spacing is obtained by extending the second carrier spacing corresponding to the first low-frequency channel by N (N>1) times. Optionally, N may be a positive integer, or N may not be a positive integer. Whether a value of N is a positive integer is not limited in embodiments of this application.

When a sample rate of a signal carried on the first high-frequency channel needs to be M (M is a positive integer greater than 1) times a minimum sample rate of a signal carried on the first low-frequency channel, a value of the first carrier spacing may include any one of the following: 3.75 MHz, 7.8125 MHz, 3.5156 MHz, 7.03125 MHz, 7.93 MHz, 3.91 MHz, 8.2 MHz, or 4.05 MHz.

In this embodiment of this application, the value of the first carrier spacing is predefined in a protocol. Various values of the first carrier spacing may be prestored in a memory of the transmit device; and when the transmit device sends the high-frequency physical layer signal, a proper carrier spacing may be obtained from the memory based on an actual requirement to send the signal.

In some implementations, the first carrier spacing may alternatively be determined by the transmit device. It should be understood that, regardless of whether the first carrier spacing is predefined in the protocol or determined by the transmit device, derivation methods of the first carrier spacing are similar.

Optionally, as shown in FIG. 5, the first carrier spacing may be determined via the following step 501 and step 502.

Step 501: Determine a high-frequency effective bandwidth in a channel bandwidth of the first high-frequency channel.

The high-frequency effective bandwidth includes a bandwidth corresponding to a data subcarrier, a bandwidth corresponding to a pilot subcarrier, and a bandwidth corresponding to a direct current subcarrier. Because a guard subcarrier does not need to carry an effective signal, the high-frequency effective bandwidth does not include a bandwidth corresponding to the guard subcarrier. The high-frequency effective bandwidth is actually an effective channel bandwidth in a channel bandwidth of a high-frequency channel.

In this embodiment of this application, the channel bandwidth of the high-frequency channel may include 270 MHz, 540 MHz, 1080 MHz, 2160 MHz, 4320 MHz, and 8640 MHz.

In this embodiment of this application, in the channel bandwidth of the high-frequency channel, a range of a proportion of the high-frequency effective bandwidth may be 0.75 to 0.85. In an implementation, a channel bandwidth whose proportion is 0.8 in the channel bandwidth of the high-frequency channel is determined as the high-frequency effective bandwidth, that is, a bandwidth whose proportion is 0.2 in the channel bandwidth of the high-frequency channel is determined as a guard bandwidth. It should be noted that, when the channel bandwidth of the high-frequency channel increases to a specific extent, the guard bandwidth in the channel bandwidth tends to be stable (that is, the guard bandwidth basically remains unchanged). For example, when channel bandwidths are 270 MHz, 540 MHz, 1080 MHz, and 2160 MHz, high-frequency effective bandwidths in the channel bandwidths are determined based on the foregoing proportion. When channel bandwidths are 4320 MHz and 8640 MHz, high-frequency effective bandwidths in the channel bandwidths are differences between a fixed bandwidth and the channel bandwidths. The fixed bandwidth is the guard bandwidth.

For example, when the channel bandwidth of the first high-frequency channel is 270 MHz, and the range of the proportion of the high-frequency effective bandwidth is 0.75 to 0.85, a range of the high-frequency effective bandwidth is 202.5 MHz (that is, 270 MHz×0.75) to 229.5 MHz (270 MHz×0.85), and when the proportion of the high-frequency effective bandwidth is 0.8, the high-frequency effective bandwidth is 216 MHz (270 MHz × 0.8).

Table 3 and Table 4 below show examples of high-frequency effective bandwidths of high-frequency channels with different channel bandwidths.

**Table 3**

| Channel bandwidth | Range of a proportion of an effective bandwidth | Range of the effective bandwidth | Proportion of the effective bandwidth | Effective bandwidth |
|---|---|---|---|---|
| 270 MHz | 0.75 to 0.85 | 202.5 MHz to 229.5 MHz | 0.8 | 216 MHz |
| 540 MHz | 0.75 to 0.85 | 405 MHz to 459 MHz | 0.8 | 432 MHz |
| 1080 MHz | 0.75 to 0.85 | 810 MHz to 918 MHz | 0.8 | 864 MHz |
| 2160 MHz | 0.75 to 0.85 | 1620 MHz to 1836 MHz | 0.8 | 1728 MHz |

For example, when the channel bandwidth of the first high-frequency channel is 270 MHz, and the range of the proportion of the high-frequency effective bandwidth is 0.75 to 0.85, a range of the high-frequency effective bandwidth is 202.5 MHz (that is, 270 MHz × 0.75) to 229.5 MHz (270 MHz × 0.85), and when the proportion of the high-frequency effective bandwidth is 0.8, the high-frequency effective bandwidth is 216 MHz (270 MHz × 0.8).

When the channel bandwidth of the first high-frequency channel is 2160 MHz, a guard bandwidth in the channel bandwidth is 432 MHz (that is, 2160 MHz-1728 MHz). In this embodiment of this application, when the channel bandwidth of the first high-frequency channel is greater than 2160 MHz, the guard bandwidth in the channel bandwidth of the first high-frequency channel is fixed at 432 MHz.

**Table 4**

| Channel bandwidth | Guard bandwidth | Effective bandwidth | Range of the effective bandwidth |
|---|---|---|---|
| 4320 MHz | 432 MHz | 3888 MHz | 3600 MHz to 4000 MHz |
| 8640 MHz | 432 MHz | 8208 MHz | 7800 MHz to 8600 MHz |

Step 502: Determine the first carrier spacing based on the high-frequency effective bandwidth and a quantity of effective subcarriers corresponding to a channel bandwidth of the first low-frequency channel.

It should be understood that the effective subcarrier includes a data subcarrier, a pilot subcarrier, and a direct current subcarrier.

The channel bandwidth of the first low-frequency channel may include 20 MHz, 40 MHz, 80 MHz, and 160 MHz. In this embodiment of this application, first carrier spacings corresponding to first high-frequency channels with different channel bandwidths may be obtained by extending second carrier spacings of first low-frequency channels with different channel bandwidths. Optionally, there may be one or more combination relationships between the channel bandwidths of the first high-frequency channels and the channel bandwidths of the first low-frequency channels. For example, Table 5 shows several combination relationships between the channel bandwidths of the first high-frequency channels and the channel bandwidths of the first low-frequency channels.

**Table 5**

| Channel bandwidth of the first high-frequency channel | Channel bandwidth of the first low-frequency channel and a corresponding protocol | |
|---|---|---|
| 270 MHz | 20 MHz | 802.11n/802.11ac |
| 540 MHz | 20 MHz | 802.11n/802.11ac |
| | 40 MHz | 802.11n/802.11ac |
| 1080 MHz | 20 MHz | 802.11ax/802.11be |
| | 40 MHz | 802.11n/802.11ac |
| | 80 MHz | 802.11ac |
| 2160 MHz | 20 MHz | 802.11ax/802.11be |
| | 40 MHz | 802.11ax/802.11be |
| | 80 MHz | 802.11ac |
| | 160 MHz | 802.11ac |
| 4320 MHz | 40 MHz | 802.11ax/802.11be |
| | 80 MHz | 802.11ax/802.11be |
| | 160 MHz | 802.11ac |
| 8640 MHz | 80 MHz | 802.11ax/802.11be |
| | 160 MHz | 802.11ax/802.11be |

In this embodiment of this application, the effective bandwidth, the quantity of effective subcarriers, and a subcarrier spacing satisfy:

Effective bandwidth=quantity of subcarriers×subcarrier spacing

It should be understood that when a quantity of effective subcarriers corresponding to a high-frequency channel is the same as a quantity of effective subcarriers corresponding to a low-frequency channel, a manner of processing a signal sent on the high-frequency channel is similar to a manner of processing a signal sent on the low-frequency channel. Therefore, to ensure that a manner of processing a high-frequency signal is the same as a manner of processing a low-frequency signal, the quantity of effective subcarriers corresponding to the first low-frequency channel is used as a quantity of effective subcarriers corresponding to the first high-frequency channel, and then the first carrier spacing is calculated according to the foregoing formula of a relationship between the effective bandwidth, the quantity of effective subcarriers, and the subcarrier spacing, where the first carrier spacing is a ratio of the high-frequency effective bandwidth to the quantity of effective subcarriers corresponding to the first low-frequency channel.

With reference to Table 3, Table 4, and Table 5, Table 6 shows an example of possible value ranges and values of the first carrier spacing in different cases.

**Table 6**

| Channel bandwidth of the first high-frequency channel | Channel bandwidth of the first low-frequency channel | Quantity of effective subcarriers corresponding to the first low-frequency channel | Range of the high-frequency effective bandwidth | Range of the first carrier spacing | High-frequency effective bandwidth | First carrier spacing |
|---|---|---|---|---|---|---|
| 270 MHz | 20 MHz | 57 | 202.5 MHz to 229.5 MHz | 3.55 MHz to 4.03 MHz | 216 MHz | 3.79 MHz |
| 540 MHz | 20 MHz | 57 | 405 MHz to 459 MHz | 7.11 MHz to 8.05 MHz | 432 MHz | 7.58 MHz |
| | 40 MHz | 117 | | 3.46 MHz to 3.92 MHz | | 3.69 MHz |
| 1080 | 20 MHz | 245 | 810 MHz to 918 MHz | 3.31 MHz to 3.75 MHz | 864 MHz | 3.53 MHz |
| | 40 MHz | 117 | | 6.92 MHz to 7.85 MHz | | 7.38 MHz |
| | 80 MHz | 245 | | 3.31 MHz to 3.75 MHz | | 3.53 MHz |

(continued)

| Channel bandwidth of the first high-frequency channel | Channel bandwidth of the first low-frequency channel | Quantity of effective subcarriers corresponding to the first low-frequency channel | Range of the high-frequency effective bandwidth | Range of the first carrier spacing | High-frequency effective bandwidth | First carrier spacing |
|---|---|---|---|---|---|---|
| 2160 MHz | 20 MHz | 245 | 1620 MHz to 1836 MHz | 6.61 MHz to 7.5 MHz | 1728 MHz | 7.05 MHz |
| | 40 MHz | 489 | | 3.313 MHz to 3.755 MHz | | 3.534 MHz |
| | 80 MHz | 245 | | 6.61 MHz to 7.5 MHz | | 7.05 MHz |
| | 160 MHz | 501 | | 3.23 MHz to 3.67 MHz | | 3.5 MHz |
| 4320 MHz | 40 MHz | 489 | 3600 MHz to 4000 MHz | 7.36 MHz to 8.18 MHz | 3888 MHz | 7.95 MHz |
| | 80 MHz | 1001 | | 3.6 MHz to 4 MHz | | 3.884 MHz |
| | 160 MHz | 501 | | 7.19 MHz to 7.98 MHz | | 7.76 MHz |
| 8640 MHz | 80 MHz | 1001 | 7800 MHz to 8600 MHz | 7.79 MHz to 8.59 MHz | 8208 MHz | 8.2 MHz |
| | 160 MHz | 2025 | | 3.85 MHz to 4.25 MHz | | 4.05 MHz |

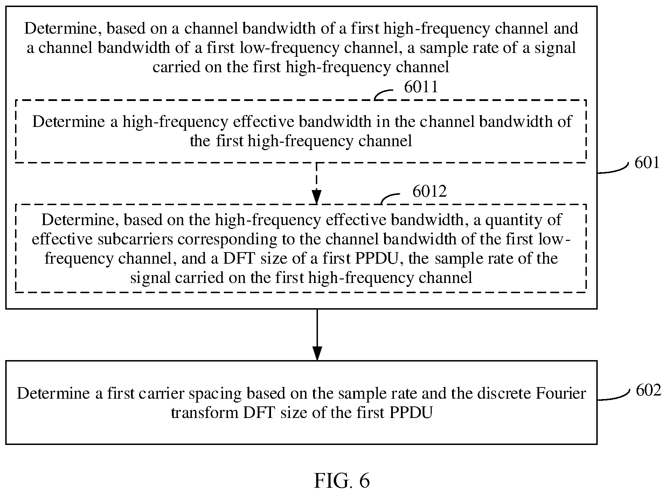

Optionally, as shown in FIG. 6, the first carrier spacing may be determined via the following step 601 and step 602.

Step 601: Determine, based on a channel bandwidth of the first high-frequency channel and a channel bandwidth of the first low-frequency channel, a sample rate (sample rate) of a signal carried on the first high-frequency channel.

It should be understood that the sample rate is M times a minimum sample rate of a signal carried on the first low-frequency channel, where M is a positive integer greater than 1. In this embodiment of this application, the sample rate may also be referred to as a signal bandwidth, a baseband clock frequency, or a baseband sampling clock frequency. This is not limited in embodiments of this application.

Specifically, the sample rate of the signal carried on the first high-frequency channel is determined via the following step 6011 and step 6012.

Step 6011: Determine a high-frequency effective bandwidth in the channel bandwidth of the first high-frequency channel.

Same as that in step 501, the high-frequency effective bandwidth includes a bandwidth corresponding to a data subcarrier, a bandwidth corresponding to a pilot subcarrier, and a bandwidth corresponding to a direct current subcarrier. For related descriptions of the high-frequency effective bandwidth, refer to the detailed descriptions of step 501 in the foregoing embodiment. Details are not described herein again.

Step 6012: Determine, based on the high-frequency effective bandwidth, a quantity of effective subcarriers corresponding to the channel bandwidth of the first low-frequency channel, and a DFT size of a first PPDU, the sample rate of the signal carried on the first high-frequency channel.

In this embodiment of this application, the sample rate satisfies the following formula:

$$\text{Sample rate} = \text{carrier spacing} \times \text{DFT size}$$

The DFT size is a quantity of points of discrete Fourier transform, and the carrier spacing may be determined by using the process described in step 502. The sample rate of the signal carried on the first high-frequency channel may be calculated based on the carrier spacing determined in step 501 and step 502 and the DFT size of the to-be-generated first PPDU.

**Table 7**

| Channel bandwidth of the first high-frequency channel | Channel bandwidth of the first low-frequency channel | DFT size | Range of the carrier spacing | Range of the sample rate | Carrier spacing | Sample rate |
|---|---|---|---|---|---|---|
| 270 MHz | 20 MHz | 64 | 3.55 MHz to 4.03 MHz | 227.2 MHz to 257.92 MHz | 3.79 MHz | 242.56 MHz |
| 540 MHz | 20 MHz | 64 | 7.11 MHz to 8.05 MHz | 455.04 MHz to 515.2 MHz | 7.58 MHz | 485.12 MHz |
| | 40 MHz | 128 | 3.46 MHz to 3.92 MHz | 442.88 MHz to 501.76 MHz | 3.69 MHz | 472.32 MHz |
| 1080 | 20 MHz | 256 | 3.31 MHz to 3.75 MHz | 847.36 MHz to 960 MHz | 3.53 MHz | 903.68 MHz |
| | 40 MHz | 128 | 6.92 MHz to 7.85 MHz | 885.76 MHz to 1004.8 MHz | 7.38 MHz | 944.64 MHz |
| | 80 MHz | 256 | 3.31 MHz to 3.75 MHz | 847.36 MHz to 960 MHz | 3.53 MHz | 903.68 MHz |
| 2160 MHz | 20 MHz | 256 | 6.61 MHz to 7.5 MHz | 1692.16 MHz to 1920 MHz | 7.05 MHz | 1804.8 MHz |
| | 40 MHz | 512 | 3.313 MHz to 3.755 MHz | 1696.26 MHz to 1922.56 MHz | 3.534 MHz | 1809.41 MHz |
| | 80 MHz | 256 | 6.61 MHz to 7.5 MHz | 1692.16 MHz to 1920 MHz | 7.05 MHz | 1804.8 MHz |
| | 160 MHz | 512 | 3.23 MHz to 3.67 MHz | 1653.76 MHz to 1879.04 MHz | 3.5 MHz | 1792 MHz |

(continued)

| Channel bandwidth of the first high-frequency channel | Channel bandwidth of the first low-frequency channel | DFT size | Range of the carrier spacing | Range of the sample rate | Carrier spacing | Sample rate |
|---|---|---|---|---|---|---|
| 4320 MHz | 40 MHz | 512 | 7.36 MHz to 8.18 MHz | 3768.32 MHz to 4188.16 MHz | 7.95 MHz | 4070.4 MHz |
| | 80 MHz | 1024 | 3.6 MHz to 4 MHz | 3686.4 MHz to 4096 MHz | 3.884 MHz | 3977.216 MHz |
| | 160 MHz | 512 | 7.19 MHz to 7.98 MHz | 3681.28 MHz to 4085.76 MHz | 7.76 MHz | 3973.12 MHz |
| 8640 MHz | 80 MHz | 1024 | 7.79 MHz to 8.59 MHz | 7976.96 MHz to 8796.16 MHz | 8.2 MHz | 8396.8 MHz |
| | 160 MHz | 2048 | 3.85 MHz to 4.25 MHz | 7884.8 MHz to 8704 MHz | 4.05 MHz | 8294.4 MHz |

Step 602: Determine the first carrier spacing based on the sample rate and the discrete Fourier transform DFT size of the first PPDU.

According to the formula: Sample rate=carrier spacing×DFT size, a DFT size of the first low-frequency channel is the same as that of the first high-frequency channel. Therefore, to implement sampling clock reusing, the sample rate of the signal carried on the first high-frequency channel needs to be an integer multiple (that is, M times) of the minimum sample rate of the signal carried on the first low-frequency channel. In each WLAN protocol for a low frequency provided in this embodiment of this application, a minimum sample rate is 20 MHz.

With reference to Table 7, a final sample rate is determined from the range of the sample rate determined in Table 7, so that the final sample rate is an integer multiple of the minimum sample rate 20M of the signal carried on the first low-frequency channel, and is close to a value of the sample rate determined in Table 7. Table 8 shows first carrier spacings under different parameters. The different parameters include the channel bandwidth of the first high-frequency channel, the channel bandwidth of the first low-frequency channel, a DFT size of a high-frequency channel a proportion of the sample rate, and the like.

**Table 8**

| Channel bandwidth of the first high-frequency channel | Channel bandwidth of the first low-frequency channel | DFT size | Range of the sample rate | Sample rate | Final sample rate | First carrier spacing |
|---|---|---|---|---|---|---|
| 270 MHz | 20 MHz | 64 | 227.2 MHz to 257.92 MHz | 242.56 MHz | 240 MHz | 3.75 MHz |
| 540 MHz | 20 MHz | 64 | 455.04 MHz to 515.2 MHz | 485.12 MHz | 500 MHz | 7.8125 MHz |
| | 40 MHz | 128 | 442.88 MHz to 501.76 MHz | 472.32 MHz | 480 MHz | 3.75 MHz |

(continued)

| Channel bandwidth of the first high-frequency channel | Channel bandwidth of the first low-frequency channel | DFT size | Range of the sample rate | Sample rate | Final sample rate | First carrier spacing |
|---|---|---|---|---|---|---|
| 1080 MHz | 20 MHz | 256 | 847.36 MHz to 960 MHz | 903.68 MHz | 900 MHz | 3.5156 MHz |
| | 40 MHz | 128 | 885.76 MHz to 1004.8 MHz | 944.64 MHz | 1000 MHz | 7.8125 MHz |
| | 80 MHz | 256 | 847.36 MHz to 960 MHz | 903.68 MHz | 900 MHz | 3.5156 MHz |
| 2160 MHz | 20 MHz | 256 | 1692.16 MHz to 1920 MHz | 1804.8 MHz | 1800 MHz | 7.03125 MHz |
| | 40 MHz | 512 | 1696.26 MHz to 1922.56 MHz | 1809.41 MHz | 1800 MHz | 3.5156 MHz |
| | 80 MHz | 256 | 1692.16 MHz to 1920 MHz | 1804.8 MHz | 1800 MHz | 7.03125 MHz |
| | 160 MHz | 512 | 1653.76 MHz to 1879.04 MHz | 1792 MHz | 1800 MHz | 3.5156 MHz |
| 4320 MHz | 40 MHz | 512 | 3768.32 MHz to 4188.16 MHz | 4070.4 MHz | 4060 MHz | 7.93 MHz |
| | 80 MHz | 1024 | 3686.4 MHz to 4096 MHz | 3977.216 MHz | 4000 MHz | 3.91 MHz |
| | 160 MHz | 512 | 3681.28 MHz to 4085.76 MHz | 3973.12 MHz | 4000 MHz | 7.8125 MHz |
| 8640 MHz | 80 MHz | 1024 | 7976.96 MHz to 8796.16 MHz | 8396.8 MHz | 8400 MHz | 8.2 MHz |
| | 160 MHz | 2048 | 7884.8 MHz to 8704 MHz | 8294.4 MHz | 8300 MHz | 4.05 MHz |

With reference to Table 8, for example, the channel bandwidth of the first high-frequency channel is 270 MHz, the channel bandwidth of the first low-frequency channel is 20 MHz, the DFT size of the to-be-sent high-frequency physical layer signal is 64, and a sample rate that is 12 times the minimum sample rate (20 MHz) is used as the sample rate of the signal carried on the first high-frequency channel, that is, the sample rate is 240 MHz. Therefore, it may be obtained that the first carrier spacing is 3.75 MHz (that is, 240 MHz/64).

In this embodiment of this application, when a sample rate of a high-frequency signal is an integer multiple (M times) of a minimum sample rate of a low-frequency signal, a sampling clock frequency (the sample rate is the sampling clock frequency) corresponding to the high-frequency signal and a sampling clock frequency corresponding to the low-frequency signal may be implemented based on same hardware (a crystal oscillator combined with a phase-locked loop). This can reduce complexity of designing a baseband chip compatible with a high frequency and a low frequency.

Step 402: The transmit device modulates the to-be-sent high-frequency physical layer signal based on the first carrier spacing, to generate a first physical layer protocol data unit PPDU.

It may be understood that signal modulation is a process in which the transmit device processes information about a signal source, to change the information into a form of a signal suitable for transmission. Correspondingly, signal demodulation is a process of extracting the information about the signal source from a received signal.

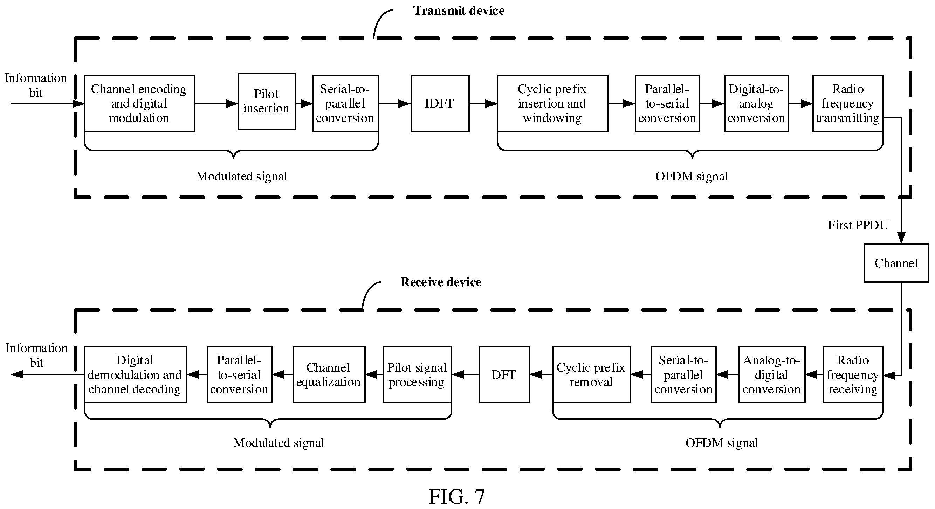

In this embodiment of this application, when the to-be-sent high-frequency physical layer signal (in this embodiment of this application, the high-frequency physical layer signal is a digital signal) is modulated by using an OFDM technology, refer to a diagram of a signal modulation framework shown in FIG. 7. Specifically, modulating a to-be-sent information bit includes: In frequency domain, channel encoding and digital modulation (for example, using a quadrature amplitude modulation (quadrature amplitude modulation, QAM) technology), pilot insertion, serial-to-parallel conversion, IDFT, cyclic prefix insertion and windowing, and parallel-to-serial conversion are performed on the to-be-sent information bit, to obtain a digital signal obtained through modulation, and then the digital signal is converted into an analog signal via a digital-to-analog converter (the signal obtained through conversion of the digital-to-analog converter is the first PPDU in this embodiment of this application), where one of parameters of the digital-to-analog converter is the sample rate or the first carrier spacing. For detailed content of a signal modulation process shown in FIG. 7, refer to the conventional technology. Details are not described again in embodiments of this application.

Step 403: The transmit device sends the first PPDU to the receive device through the first high-frequency channel. Correspondingly, the receive device receives the first PPDU from the transmit device through the first high-frequency channel.

Optionally, there may be a noise signal in a process of transmitting the first PPDU through the first high-frequency channel.

Step 404: The receive device obtains the first carrier spacing.

The first carrier spacing is N times the second carrier spacing corresponding to the first low-frequency channel, and N>1. It should be understood that a method for obtaining the first carrier spacing by the receive device is the same as the method for obtaining the first carrier spacing by the transmit device in step 401.

In this embodiment of this application, the first carrier spacing is pre-agreed on by the receive device and the transmit device, or is predefined in a protocol.

It should be noted that a sequence of step 404 and step 403 (the receive device receives the first PPDU) is not limited in embodiments of this application. To be specific, step 403 may be performed before step 404, or step 404 may be performed before step 403, or step 403 and step 404 are simultaneously performed.

Step 405: Demodulate the first PPDU based on the first carrier spacing.

In this embodiment of this application, a signal demodulation process is an inverse operation of the signal modulation process. When a clock of the transmit device is synchronized with a clock of the receive device (if the two clocks are not synchronized, clock synchronization needs to be first performed), the signal demodulation process includes analog-to-digital conversion, serial-to-parallel conversion, cyclic prefix removal, DFT, residual frequency offset and phase noise processing (that is, pilot signal processing), channel equalization, parallel-to-serial conversion, digital demodulation and channel decoding. After receiving the signal (analog signal), the receive device converts the analog signal into a digital signal via the analog-to-digital converter. Similar to that of the transmit device, one of parameters of the analog-to-digital converter is the sample rate or the first carrier spacing. For detailed content of a signal demodulation process shown in FIG. 7, refer to the conventional technology. Details are not described again in embodiments of this application.

In conclusion, in the communication method provided in this embodiment of this application, for the high-frequency channel, in a signal sending process, the carrier spacing corresponding to the high-frequency channel is set to N times (N>1) the carrier spacing corresponding to the low-frequency channel, that is, the high-frequency physical layer signal is obtained by expanding the carrier spacing of the low-frequency physical layer signal. Therefore, a manner of sending the high-frequency physical layer signal is closer to a manner of sending the low-frequency physical layer signal. In addition, a process of processing a digital signal of the high-frequency signal is close to that of the low-frequency signal. This is very friendly in chip design and implementation for a next-generation WLAN protocol that supports both a high frequency band and a low frequency band.

In addition, when the sample rate of the high-frequency signal is an integer multiple (M times) of the minimum sample rate of the low-frequency signal, because the sampling clock is usually implemented by the crystal oscillator combined with the phase-locked loop in terms of hardware, it is easier to reuse the sampling clock for sending the high-frequency signal and sending the low-frequency signal.

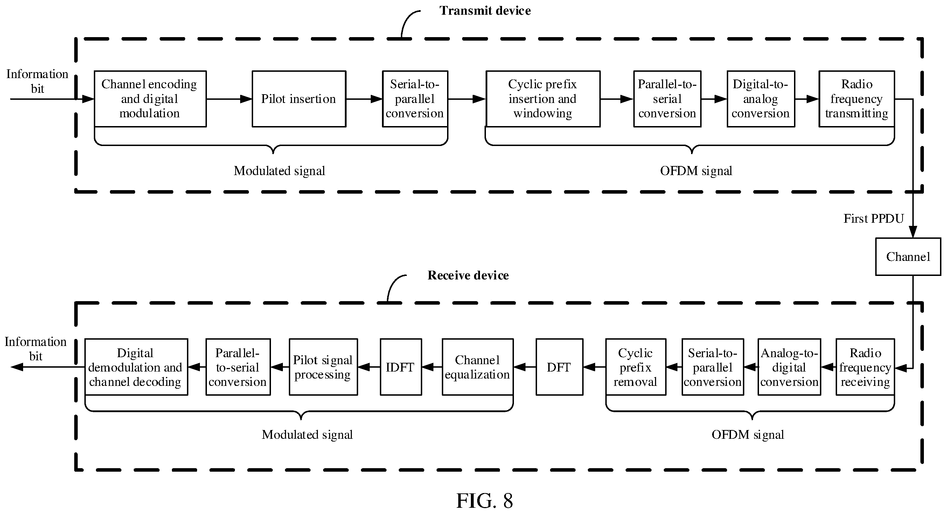

Further, refer to FIG. 8. In this embodiment of this application, on a transmit device side, modulating the to-be-sent information bit based on the first carrier spacing specifically includes: In a process of modulating the information bit based on the first carrier spacing, for data part processing, inverse discrete Fourier transform IDFT is not performed on the information bit (that is, IDFT is not performed on a data part in the generated first PPDU). In addition, for a long training field LTF in the first PPDU, signal values carried on a direct current subcarrier and a guard subcarrier in a signal of the LTF are non-zero values. Correspondingly, on a receive device side, for data part processing, IDFT processing is added after channel equalization. Further, pilot signal processing is performed after the IDFT, to obtain a finally demodulated information bit.

With reference to the diagram of the foregoing signal modulation framework based on the OFDM technology, it can be learned that the transmit device modulates data in frequency domain, and then performs IDFT processing. Therefore, the generated PPDU is formed by superimposing a plurality of independent subcarrier signals obtained through modulation. When phases of subcarriers are the same or close to each other, the superimposed signals are modulated based on signals with a same initial phase, to generate a large instantaneous power peak, resulting in a large PAPR. It can be learned that an OFDM system has a disadvantage of a high PAPR, and the high PAPR results in non-linear distortion of a signal, obvious spectrum extension interference, and in-band signal distortion, and deteriorates system performance.

In this embodiment of this application, the transmit device does not perform IDFT processing on the data part, and therefore modulates the data in time domain. In this way, superimposing of subcarriers is avoided, and a PAPR of a signal is low. However, when the transmit device modulates the data in time domain, the receive device needs to perform channel estimation and equalization on the direct current subcarrier and the guard subcarrier. Therefore, in this embodiment of this application, when IDFT processing is not performed on the data part, the signal values carried on the direct current subcarrier and the guard subcarrier in the signal of the LTF are further set to the non-zero values, for example, changed to -1 or 1, so that the receive device can smoothly perform channel estimation and equalization on the direct current subcarrier and the guard subcarrier. Through the foregoing improvement, sending and receiving the high-frequency physical layer signal by using the OFDM technology can be changed to sending and receiving the high-frequency physical layer signal in a single-carrier mode. Therefore, the PAPR can be reduced, and a change to a transmit end and a receive end is very small, which is conducive to chip implementation. It should be understood that, in the single-carrier mode, signal modulation is performed in time domain, and channel estimation and equalization need to be performed on the direct current subcarrier and the guard subcarrier at the receive end.

In the OFDM technology, the signal values carried on the direct current subcarrier and the guard subcarrier in the signal of the LTF are both 0. In this embodiment of this application, based on a principle that the PAPR of the system does not increase after some signal values of the LTF are changed, Table 9 shows signal values carried on direct current subcarriers and guard subcarriers in several signals of the LTF.

**Table 9**

| Channel bandwidth of the first high-frequency channel | Channel bandwidth of the first low-frequency channel and a corresponding protocol | | Index of the signal of the LTF | Signal value obtained through change |
|---|---|---|---|---|
| 540 MHz | 20 MHz | 802.11n/802.11ac | -32, -31, -30, -29, 0, 29, 30, and 31 | -1, 1, 1, 1, -1, - 1, 1, and 1 |
| 1080 MHz | 40 MHz | 802.11n/802.11ac | -64, -63, -62, -61, -60, -59, -1, 0, 1, 59, 60, 61, 62, and 63 | -1, 1, 1, -1, 1, 1, 1, -1, 1, -1, -1, 1, -1, and 1 |
| 2160 MHz | 20 MHz | 802.11ax/802.11be | -128, -127, -126, - 125, -124, -123, -1, 0, 1, 123, 124, 125, 126, and 127 | -1, -1, 1, 1, 1, - 1, -1, 1, -1, -1, 1, 1, 1, and -1 |
| | 80 MHz | 802.11ac | -128, -127, -126, - 125, -124, -123, -1, 0, 1, 123, 124, 125, 126, and 127 | -1, -1, -1, 1, 1, 1, -1, -1, 1, -1, - 1, 1, 1, and 1 |
| 4320 MHz | 40 MHz | 802.11ax/802.11be | -256, -255, -254, - 253, -252, -251, - 250, -249, -248, - 247, -246, -245, -2, -1, 0, 1, 2, 245, 246, 247, 248, 249, 250, 251, 252, 253, 254, and 255 | -1, 1, -1, -1, 1, - 1, -1, -1, -1, -1, 1, 1, -1, -1, -1, 1, 1, -1, -1, -1, 1, -1, -1, -1, -1, -1, 1, and 1 |
| | 160 MHz | 802.11ac | -256, -255, -254, - 253, -252, -251, - 129, -128, -127, -5, -4, -3, -2, -1, 0, 1, 2, 3, 4, 5, 127, 128, 129, 251, 252, 253, 254, and 255 | -1, -1, 1, 1, 1, 1, 1, 1, -1, 1, -1, 1, 1, 1, 1, -1, -1, -1, - 1, -1, 1, -1, 1, - 1, 1, 1, 1, 1, and 1 |

(continued)

| Channel bandwidth of the first high-frequency channel | Channel bandwidth of the first low-frequency channel and a corresponding protocol | | Index of the signal of the LTF | Signal value obtained through change |
|---|---|---|---|---|
| 8640 MHz | 80 MHz | 802.11ax/802.11be | -512, -511, -510, - 509, -508, -507, - 506, -505, -504, - 503, -502, -501, -2, -1, 0, 1, 2, 501, 502, 503, 504, 505, 506, 507, 508, 509, 510, and 511 | 1, 1, 1, -1, -1, - 1, -1, 1, 1, 1, 1, - 1, -1, -1, 1, -1, - 1, -1, -1, 1, -1, 1, 1, -1, 1, 1, -1, and -1 |

In this embodiment of this application, in the single-carrier mode, an effective signal bandwidth of the first high-frequency channel (different from the effective channel bandwidth in the foregoing embodiment, namely, the high-frequency effective bandwidth) is usually a specific proportion of the channel bandwidth, and the effective signal bandwidth is the sample rate, for example, a range of a ratio of the sample rate to the channel bandwidth may be 0.75 to 0.85. Specifically, the ratio of the sample rate to the channel bandwidth may be 0.8. Therefore, a value range of the sample rate and a value of the sample rate corresponding to the ratio of 0.8 may be determined.

The final sample rate is determined from the determined range of the sample rate, so that the final sample rate is the integer multiple of the minimum sample rate 20M of the signal carried on the first low-frequency channel, and is close to the sample rate determined when the ratio of the sample rate to the channel bandwidth is 0.8. Table 10 shows sample rates under different parameters below.

**Table 10**

| Channel bandwidth of the first high-frequency channel | Range of the proportion of the sample rate | Range of the sample rate | Proportion of the sample rate | Sample rate | Final sample rate |
|---|---|---|---|---|---|
| 540 MHz | 0.75 to 0.85 | 405 MHz to 459 MHz | 0.8 | 432 MHz | 440 MHz |
| 1080 MHz | 0.75 to 0.85 | 810 MHz to 918 MHz | 0.8 | 864 MHz | 860 MHz |
| 2160 MHz | 0.75 to 0.85 | 1620 MHz to 1836 MHz | 0.8 | 1728 MHz | 1720 MHz |
| 4320 MHz | 0.75 to 0.85 | 3240 MHz to 3672 MHz | 0.8 | 3456 MHz | 3460 MHz |
| 8640 MHz | 0.75 to 0.85 | 6480 MHz to 7344 MHz | 0.8 | 6912 MHz | 6920 MHz |

When the channel bandwidth of the first high-frequency channel is 540 MHz, the DFT size may be 64 or 128. With reference to the final sample rate 440 MHz provided in Table 10, the determined first carrier spacing is 6.875 MHz or 3.4375 MHz.

When the channel bandwidth of the first high-frequency channel is 1080 MHz, the DFT size may be 128 or 256. With reference to the final sample rate 860 MHz provided in Table 10, the determined first carrier spacing is 6.7188 MHz or 3.3594 MHz.

When the channel bandwidth of the first high-frequency channel is 2160 MHz, the DFT size may be 256 or 512. With reference to the final sample rate 1720 MHz provided in Table 10, the determined first carrier spacing is 6.7188 MHz or 3.3594 MHz.

When the channel bandwidth of the first high-frequency channel is 4320 MHz, the DFT size may be 512 or 1024. With reference to the final sample rate 3460 MHz provided in Table 10, the determined first carrier spacing is 6.7578 MHz or 3.3789 MHz.

When the channel bandwidth of the first high-frequency channel is 8640 MHz, the DFT size may be 1024 or 2048. With reference to the final sample rate 6920 MHz provided in Table 10, the determined first carrier spacing is 6.7578 MHz or 3.3789 MHz.

It should be noted that, based on the related descriptions in the foregoing embodiment, when the channel bandwidth of the high-frequency channel increases to a specific extent, a guard bandwidth in the channel bandwidth tends to be stable (that is, the guard bandwidth basically remains unchanged). For example, when channel bandwidths are 270 MHz, 540 MHz, 1080 MHz, or 2160 MHz, high-frequency effective bandwidths in the channel bandwidths are determined based on the ratio (0.8) of the sample rate to the channel bandwidth. When channel bandwidths are 4320 MHz and 8640 MHz, high-frequency effective bandwidths in the channel bandwidths are differences between a fixed bandwidth and the channel bandwidths. The fixed bandwidth is the guard bandwidth. In this embodiment of this application, when the channel bandwidth of the first high-frequency channel is greater than 2160 MHz, the guard bandwidth in the channel bandwidth of the first high-frequency channel is fixed to 432 MHz, for example, when the channel bandwidth is 4320 MHz, the sample rate is 3888 MHz, or the channel bandwidth is 8640 MHz, the sample rate is 8208 MHz.

With reference to Table 10, Table 11 shows another example of the sample rates under the different parameters below.

**Table 11**

| Channel bandwidth of the first high-frequency channel | Range of the proportion of the sample rate | Range of the sample rate | Proportion of the sample rate | Sample rate | Final sample rate |
|---|---|---|---|---|---|
| 540 MHz | 0.75 to 0.85 | 405 MHz to 459 MHz | 0.8 | 432 MHz | 440 MHz |
| 1080 MHz | 0.75 to 0.85 | 810 MHz to 918 MHz | 0.8 | 864 MHz | 860 MHz |
| 2160 MHz | 0.75 to 0.85 | 1620 MHz to 1836 MHz | 0.8 | 1728 MHz | 1720 MHz |
| 4320 MHz | / | 3600 MHz to 4000 MHz | / | 3888 MHz | 3880 MHz |
| 8640 MHz | / | 7800 MHz to 8400 MHz | / | 8208 MHz | 8200 MHz |

When the channel bandwidth of the first high-frequency channel is 540 MHz, the DFT size may be 64 or 128. With reference to the final sample rate 440 MHz provided in Table 11, the determined first carrier spacing is 6.875 MHz or 3.4375 MHz.

When the channel bandwidth of the first high-frequency channel is 1080 MHz, the DFT size may be 128 or 256. With reference to the final sample rate 860 MHz provided in Table 11, the determined first carrier spacing is 6.7188 MHz or 3.3594 MHz.

When the channel bandwidth of the first high-frequency channel is 2160 MHz, the DFT size may be 256 or 512. With reference to the final sample rate 1720 MHz provided in Table 11, the determined first carrier spacing is 6.7188 MHz or 3.3594 MHz.

When the channel bandwidth of the first high-frequency channel is 4320 MHz, the DFT size may be 512 or 1024. With reference to the final sample rate 3880 MHz provided in Table 11, the determined first carrier spacing is 7.5781 MHz or 3.7109 MHz.

When the channel bandwidth of the first high-frequency channel is 8640 MHz, the DFT size may be 1024 or 2048. With reference to the final sample rate 8200 MHz provided in Table 11, the determined first carrier spacing is 8.0078 MHz or 4.0039 MHz.

In conclusion, in this embodiment of this application, some signal values in the LTF are changed, so that a requirement for channel estimation and equalization in the single-carrier mode can be met, and a change of the PAPR of the LTF may be unobvious.

It should be understood that a PAPR of the data part is very high, which is a bottleneck of the PAPR of the entire PPDU. In this embodiment of this application, after the carrier spacing corresponding to the first high-frequency channel (namely, the first carrier spacing) is obtained by extending the carrier spacing corresponding to the first low-frequency channel (namely, the second carrier spacing), and in the data generation process of the data part on the transmit device side, IDFT processing is removed and some signal values of the LTF are changed, a PAPR of a data part obtained through change is significantly reduced in comparison with the PAPR of the data part in the first low-frequency channel (this is because a PAPR of a signal obtained through single-carrier time-domain modulation is very low). This greatly reduces a requirement of the transmit end for a component. In addition, compared with the PAPR of the LTF in the first low-frequency channel, the PAPR of the LTF obtained through change does not change significantly, that is, it can be ensured that the LTF obtained through change does not obviously increase the PAPR of the system.

With reference to Table 9 above, Table 12 shows PAPRs of the LTF in the first low-frequency channel (referred to as PAPRs of a low-frequency LTF for short) and PAPRs of the LTF obtained through change (PAPRs of the LTF obtained through change) under different parameters.

**Table 12**

| Channel bandwidth of the first high-frequency channel | Channel bandwidth of the first low-frequency channel and a corresponding protocol | | PAPR of the low-frequency LTF | PAPR of the LTF obtained through change |
|---|---|---|---|---|
| 540 MHz | 20 MHz | 802.11n/802.11ac | 4.9 | 4.74 |

(continued)

| Channel bandwidth of the first high-frequency channel | Channel bandwidth of the first low-frequency channel and a corresponding protocol | | PAPR of the low-frequency LTF | PAPR of the LTF obtained through change |
|---|---|---|---|---|
| 1080 MHz | 40 MHz | 802.11n/802.11ac | 7.42 | 6.23 |
| 2160 MHz | 20 MHz | 802.11ax/802.11be | 5.36 | 5.09 |
| | 80 MHz | 802.11ac | 5.21 | 5.25 |
| 4320 MHz | 40 MHz | 802.11ax/802.11be | 5.47 | 5.24 |
| | 160 MHz | 802.11ac | 8.09 | 7.09 |
| 8640 MHz | 80 MHz | 802.11ax/802.11be | 6.29 | 5.99 |

Further, demodulating the first PPDU on the receive end side specifically includes: converting a signal of a data field in the first PPDU from a time domain signal into a frequency domain signal; performing equalization processing on the signal of the data field in the first PPDU based on the first carrier spacing; then converting a signal, obtained through equalization processing, of the data field in the first PPDU from a frequency domain signal into a time domain signal; and processing a pilot signal of the data field in the first PPDU.

In this embodiment of this application, on the receive device side, originally, pilot signal processing (pilot signal processing includes residual frequency offset processing and phase noise processing) is further included after DFT processing and before channel equalization; and when IDFT processing is removed for the transmit device, the receive device performs IDFT processing after channel equalization to obtain the time domain signal, and then the receive device processes the pilot signal.

Correspondingly, an embodiment of this application provides a transmit device. In this embodiment of this application, the transmit device may be divided into functional modules based on the foregoing method example, for example, each functional module may be obtained through division based on each corresponding function, or two or more functions may be integrated into one processing module. The integrated module may be implemented in a form of hardware, or may be implemented in a form of a software functional module. It should be noted that in embodiments of the present invention, module division is an example, and is merely logical function division. During actual implementation, another division manner may be used.

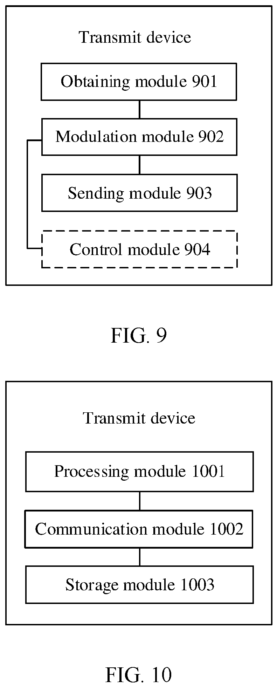

When each functional module is obtained through division based on each corresponding function, FIG. 9 is a diagram of a possible structure of the transmit device in the foregoing embodiments. As shown in FIG. 9, the transmit device includes an obtaining module 901, a modulation module 902, and a sending module 903. The obtaining module 901 is configured to: obtain a first carrier spacing, where the first carrier spacing is N times a second carrier spacing corresponding to a first low-frequency channel, and N>1, for example, perform step 401 in the foregoing method embodiment. The modulation module 902 is configured to modulate a to-be-sent high-frequency physical layer signal based on the first carrier spacing, to generate a first PPDU, for example, perform step 402 in the foregoing method embodiment. The sending module 903 is configured to send the first PPDU to a receive device through a first high-frequency channel, for example, perform step 403 in the foregoing method embodiment.

Optionally, the transmit device provided in this embodiment of this application further includes a control module 904. The control module 904 is configured to control the modulation module 902 to: in a process of modulating the high-frequency physical layer signal based on the first carrier spacing, skip performing IDFT on the high-frequency physical layer signal, and set signal values carried on a direct current subcarrier and a guard subcarrier in a signal of an LTF in the first PPDU to non-zero values.

The modules of the transmit device may be further configured to perform other actions in the foregoing method embodiments. All related content of the steps in the foregoing method embodiment may be cited in function descriptions of the corresponding functional modules. Details are not described herein again.

When an integrated unit is used, FIG. 10 is a diagram of another possible structure of the transmit device in the foregoing embodiments. As shown in FIG. 10, the transmit device provided in this embodiment of this application may include a processing module 1001 and a communication module 1002. The processing module 1001 may be configured to control and manage an action of the transmit device. For example, the processing module 1001 may be configured to support the transmit device in performing step 401 and step 402 in the foregoing method embodiment, and/or another process of the technology described in this specification. The communication module 1002 may be configured to support the transmit device in communicating with another network entity, for example, support the transmit device in performing step 403 in the foregoing method embodiment. Optionally, as shown in FIG. 10, the transmit device may further include a storage module 1003, configured to store program code and data of the transmit device.

The processing module 1001 may be a processor or a controller (for example, may be the processor 301 shown in FIG. 3). Alternatively, the processor may be a combination of processors implementing a computing function, for example, a combination of one or more microprocessors, or a combination of a DSP and a microprocessor. The communication module 1002 may be a transceiver, a transceiver circuit, a communication interface (for example, may be the communication interface 303 shown in FIG. 1), or the like. The storage module 1003 may be a memory (for example, may be the memory 302 shown in FIG. 3).

When the processing module 1001 is the processor, the communication module 1002 is the communication interface, and the storage module 1003 is the memory, the processor, the transceiver, and the memory may be connected through a bus. The bus may be a peripheral component interconnect (peripheral component interconnect, PCI) bus, an extended industry standard architecture (extended industry standard architecture, EISA) bus, or the like. The bus may be classified into an address bus, a data bus, a control bus, or the like.

For more details about implementing the foregoing functions by the modules included in the transmit device, refer to the descriptions in the foregoing method embodiment. Details are not described herein again.

Embodiments in this specification are all described in a progressive manner, for same or similar parts in embodiments, refer to these embodiments, and each embodiment focuses on a difference from other embodiments.

Correspondingly, an embodiment of this application provides a receive device. In this embodiment of this application, the receive device may be divided into functional modules based on the foregoing method example, for example, each functional module may be obtained through division based on each corresponding function, or two or more functions may be integrated into one processing module. The integrated module may be implemented in a form of hardware, or may be implemented in a form of a software functional module. It should be noted that in embodiments of the present invention, module division is an example, and is merely logical function division. During actual implementation, another division manner may be used.

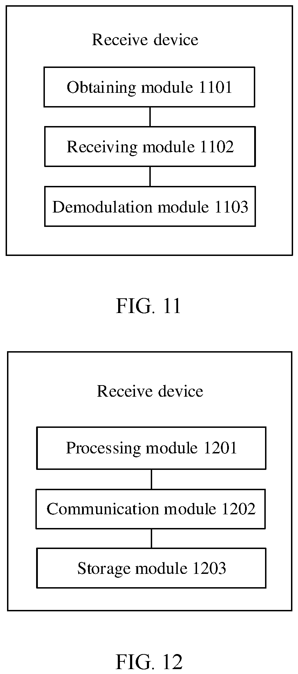

When each functional module is obtained through division based on each corresponding function, FIG. 11 is a diagram of a possible structure of the receive device in the foregoing embodiments. As shown in FIG. 11, the receive device includes an obtaining module 1101, a receiving module 1102, and a demodulation module 1103. The obtaining module 1101 is configured to: obtain a first carrier spacing, where the first carrier spacing is N times a second carrier spacing corresponding to a first low-frequency channel, and N>1, for example, perform step 404 in the foregoing method embodiment. The receiving module 1102 is configured to: receive a first PPDU from a transmit device through a first high-frequency channel, where the first PPDU is a high-frequency physical layer signal, for example, perform step 403 in the foregoing method embodiment. The demodulation module 1103 is configured to demodulate the first PPDU based on the first carrier spacing, for example, perform step 405 in the foregoing method embodiment.

Optionally, the demodulation module 1103 is specifically configured to: convert a signal of a data field in the first PPDU from a time domain signal into a frequency domain signal; perform equalization processing on the signal of the data field in the first PPDU based on the first carrier spacing; then convert a signal, obtained through equalization processing, of the data field in the first PPDU from a frequency domain signal into a time domain signal; and process a pilot signal of the data field in the first PPDU.

The modules of the receive device may be further configured to perform other actions in the foregoing method embodiments. All related content of the steps in the foregoing method embodiment may be cited in function descriptions of the corresponding functional modules. Details are not described herein again.

When an integrated unit is used, FIG. 12 is a diagram of another possible structure of the receive device in the foregoing embodiments. As shown in FIG. 12, the receive device provided in this embodiment of this application may include a processing module 1201 and a communication module 1202. The processing module 1201 may be configured to control and manage an action of the receive device. For example, the processing module 1201 may be configured to support the receive device in performing step 404 and step 405 in the foregoing method embodiment, and/or another process of the technology described in this specification. The communication module 1202 may be configured to support the receive device in communicating with another network entity, for example, support the receive device in performing step 403 in the foregoing method embodiment. Optionally, as shown in FIG. 12, the receive device may further include a storage module 1203, configured to store program code and data of the receive device.

The processing module 1201 may be a processor or a controller (for example, may be the processor 301 shown in FIG. 3). Alternatively, the processor may be a combination of processors implementing a computing function, for example, a combination of one or more microprocessors, or a combination of a DSP and a microprocessor. The communication module 1202 may be a transceiver, a transceiver circuit, a communication interface (for example, may be the communication interface 303 shown in FIG. 1), or the like. The storage module 1203 may be a memory (for example, may be the memory 302 shown in FIG. 3).

When the processing module 1201 is the processor, the communication module 1202 is the communication interface, and the storage module 1203 is the memory, the processor, the transceiver, and the memory may be connected through a bus. The bus may be a PCI bus, an EISA bus, or the like. The bus may be classified into an address bus, a data bus, a control bus, or the like.

For more details about implementing the foregoing functions by the modules included in the receive device, refer to the descriptions in the foregoing method embodiment. Details are not described herein again.

Embodiments in this specification are all described in a progressive manner, for same or similar parts in embodiments, refer to these embodiments, and each embodiment focuses on a difference from other embodiments.

All or some of the foregoing embodiments may be implemented by software, hardware, firmware, or any combination thereof. When a software program is used to implement embodiments, all or some of embodiments may be implemented in a form of a computer program product. The computer program product includes one or more computer instructions. When the computer instructions are loaded and executed on a computer, all or some of the procedures or functions in embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a magnetic disk, or a magnetic tape), an optical medium (for example, a digital video disc (digital video disc, DVD)), a semiconductor medium (for example, a solid state drive (solid state drive, SSD)), or the like.

The foregoing descriptions about implementations allow a person skilled in the art to understand that, for the purpose of convenient and brief description, division into the foregoing functional modules is used as an example for illustration. In an actual application, the foregoing functions may be allocated to different functional modules for implementation based on a requirement, that is, an inner structure of an apparatus is divided into different functional modules to implement all or some of the functions described above. For a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the modules or units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be in an electric form, a mechanical form, or another form.

The units described as separate parts may or may not be physically separate, and parts displayed as units may or may not be physical units, may be located at one location, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, or a network device) or a processor to perform all or some of the steps of the methods described in embodiments of this application. The foregoing storage medium includes any medium that can store program code, such as a flash memory, a removable hard disk drive, a read-only memory, a random access memory, a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

**Claims**

1. A communication method, applied to a transmit device, wherein the method comprises:

obtaining a first carrier spacing, wherein the first carrier spacing is N times a second carrier spacing corresponding to a first low-frequency channel, and N>1;

modulating a to-be-sent high-frequency physical layer signal based on the first carrier spacing, to generate a first physical layer protocol data unit PPDU; and

sending the first PPDU to a receive device through a first high-frequency channel.

2. The method according to claim 1, wherein

a value range of the first carrier spacing comprises any one of the following: [3.55 MHz, 4.03 MHz], [7.11 MHz, 8.05 MHz], [3.46 MHz, 3.92 MHz], [6.92 MHz, 7.85 MHz], [3.31 MHz, 3.75 MHz], [6.61 MHz, 7.5 MHz], [3.23 MHz, 3.67 MHz], [3.313 MHz, 3.755 MHz], [7.19 MHz, 7.98 MHz], [7.36 MHz, 8.18 MHz], [3.6 MHz, 4 MHz], [7.79 MHz, 8.59 MHz], or [3.85 MHz, 4.25 MHz], wherein MHz represents megabyte, and is a unit of the first carrier spacing.

3. The method according to claim 1 or 2, wherein

a value of the first carrier spacing comprises any one of the following: 3.75 MHz, 7.8125 MHz, 3.5156 MHz, 7.03125 MHz, 7.93 MHz, 3.91 MHz, 8.2 MHz, or 4.05 MHz.

4. The method according to any one of claims 1 to 3, wherein the modulating a to-be-sent high-frequency physical layer signal based on the first carrier spacing comprises:

in a process of modulating the high-frequency physical layer signal based on the first carrier spacing, for data part processing, skipping performing inverse discrete Fourier transform IDFT on the high-frequency physical layer signal, and setting signal values carried on a direct current subcarrier and a guard subcarrier in a signal of a long training field LTF in the first PPDU to non-zero values.

5. The method according to claim 4, wherein

in the signal of the LTF, signal values whose indexes are -32, -31, -30, -29, 0, 29, 30, and 31 are successively -1, 1, 1, 1, -1, -1, 1, and 1; or

in the signal of the LTF, signal values whose indexes are -64, -63, -62, -61, -60, -59, -1, 0, 1, 59, 60, 61, 62, and 63 are successively -1, 1, 1, -1, 1, 1, 1, -1, 1, -1, -1, 1, -1, and 1; or

in the signal of the LTF, signal values whose indexes are -128, -127, -126, -125, -124, -123, -1, 0, 1, 123, 124, 125, 126, and 127 are successively -1, -1, -1, 1, 1, 1, -1, -1, 1, -1, -1, 1, 1, and 1; or

in the signal of the LTF, signal values whose indexes are -128, -127, -126, -125, -124, -123, -1, 0, 1, 123, 124, 125, 126, and 127 are successively -1, -1, 1, 1, 1, -1, -1, 1, -1, -1, 1, 1, 1, and -1; or

in the signal of the LTF, signal values whose indexes are -256, -255, -254, -253, -252, -251, -129, -128, -127, -5, -4, -3, -2, -1, 0, 1, 2, 3, 4, 5, 127, 128, 129, 251, 252, 253, 254, and 255 are successively -1, -1, 1, 1, 1, 1, 1, 1, -1, 1, -1, 1, 1, 1, -1, -1, -1, -1, -1, 1, -1, 1, -1, 1, 1, 1, 1, and 1; or

in the signal of the LTF, signal values whose indexes are -256, -255, -254, -253, -252, -251, -250, -249, -248, -247, -246, -245, -2, -1, 0, 1, 2, 245, 246, 247, 248, 249, 250, 251, 252, 253, 254, and 255 are successively -1, 1, -1, -1, 1, -1, -1, -1, -1, -1, 1, 1, -1, -1, -1, 1, 1, -1, -1, -1, 1, -1, -1, -1, -1, -1, 1, and 1; or

in the signals of the LTF, signal values whose indexes are -512, -511, -510, -509, -508, - 507, -506, -505, -504, -503, -502, -501, -2, -1, 0, 1, 2, 501, 502, 503, 504, 505, 506, 507, 508, 509, 510, and 511 are successively 1, 1, 1, -1, -1, -1, -1, 1, 1, 1, 1, -1, -1, -1, 1, -1, -1, -1, -1, 1, -1, 1, 1, -1, 1, 1, -1, and -1.

6. The method according to claim 1 or 2, wherein

the first carrier spacing is determined in the following manner:

determining a high-frequency effective bandwidth in a channel bandwidth of the first high-frequency channel, wherein the high-frequency effective bandwidth comprises a bandwidth corresponding to a data subcarrier, a bandwidth corresponding to a pilot subcarrier, and a bandwidth corresponding to a direct current subcarrier; and

determining the first carrier spacing based on the high-frequency effective bandwidth and a quantity of effective subcarriers corresponding to a channel bandwidth of the first low-frequency channel.

7. The method according to claim 3, wherein

the first carrier spacing is determined in the following manner:

determining, based on a channel bandwidth of the first high-frequency channel and a channel bandwidth of the first low-frequency channel, a sample rate of a signal carried on the first high-frequency channel, wherein the sample rate is M times a minimum sample rate of a signal carried on the first low-frequency channel, and M is a positive integer greater than 1; and
determining the first carrier spacing based on the sample rate and a discrete Fourier transform DFT size of the first PPDU.

8. The method according to claim 7, wherein the determining, based on a channel bandwidth of the first high-frequency channel and a channel bandwidth of the first low-frequency channel, a sample rate of a signal carried on the first high-frequency channel comprises:

determining a high-frequency effective bandwidth in the channel bandwidth of the first high-frequency channel, wherein the high-frequency effective bandwidth comprises a bandwidth corresponding to a data subcarrier, a bandwidth corresponding to a pilot subcarrier, and a bandwidth corresponding to a direct current subcarrier; and
determining, based on the high-frequency effective bandwidth, a quantity of effective subcarriers corresponding to the channel bandwidth of the first low-frequency channel, and the DFT size of the first PPDU, the sample rate of the signal carried on the first high-frequency channel.

9. A communication method, applied to a receive device, wherein the method comprises:

obtaining a first carrier spacing, wherein the first carrier spacing is N times a second carrier spacing corresponding to a first low-frequency channel, and N>1;
receiving a first physical layer protocol data unit PPDU from a transmit device through a first high-frequency channel, wherein the first PPDU is a high-frequency physical layer signal; and
demodulating the first PPDU based on the first carrier spacing.

10. The method according to claim 9, wherein
a value range of the first carrier spacing comprises any one of the following:
[3.55 MHz, 4.03 MHz], [7.11 MHz, 8.05 MHz], [3.46 MHz, 3.92 MHz], [6.92 MHz, 7.85 MHz], [3.31 MHz, 3.75 MHz], [6.61 MHz, 7.5 MHz], [3.23 MHz, 3.67 MHz], [3.313 MHz, 3.755 MHz], [7.19 MHz, 7.98 MHz], [7.36 MHz, 8.18 MHz], [3.6 MHz, 4 MHz], [7.79 MHz, 8.59 MHz], or [3.85 MHz, 4.25 MHz], wherein MHz represents megabyte, and is a unit of the first carrier spacing.

11. The method according to claim 9 or 10, wherein
a value of the first carrier spacing comprises any one of the following: 3.75 MHz, 7.8125 MHz, 3.5156 MHz, 7.03125 MHz, 7.93 MHz, 3.91 MHz, 8.2 MHz, or 4.05 MHz.

12. The method according to any one of claims 9 to 11, wherein
in a process of modulating the signal by the transmit device, for data part processing, no inverse discrete Fourier transform IDFT is performed on the high-frequency physical layer signal, and signal values carried on a direct current subcarrier and a guard subcarrier in a signal of a long training field LTF in the first PPDU are non-zero values.

13. The method according to claim 12, wherein

in the signal of the LTF, signal values whose indexes are -32, -31, -30, -29, 0, 29, 30, and 31 are successively -1, 1, 1, 1, -1, -1, 1, and 1; or
in the signal of the LTF, signal values whose indexes are -64, -63, -62, -61, -60, -59, -1, 0, 1, 59, 60, 61, 62, and 63 are successively -1, 1, 1, -1, 1, 1, 1, -1, 1, -1, -1, 1, -1, and 1; or
in the signal of the LTF, signal values whose indexes are -128, -127, -126, -125, -124, -123, -1, 0, 1, 123, 124, 125, 126, and 127 are successively -1, -1, -1, 1, 1, 1, -1, -1, 1, -1, -1, 1, 1, and 1; or
in the signal of the LTF, signal values whose indexes are -128, -127, -126, -125, -124, -123, -1, 0, 1, 123, 124, 125, 126, and 127 are successively -1, -1, 1, 1, 1, -1, -1, 1, -1, -1, 1, 1, 1, and -1; or
in the signal of the LTF, signal values whose indexes are -256, -255, -254, -253, -252, -251, -129, -128, -127, -5, -4, -3, -2, -1, 0, 1, 2, 3, 4, 5, 127, 128, 129, 251, 252, 253, 254, and 255 are successively -1, -1, 1, 1, 1, 1, 1, 1, -1, 1, -1, 1, 1, 1, -1, -1, -1, -1, -1, 1, -1, 1, -1, 1, 1, 1, 1, and 1; or
in the signal of the LTF, signal values whose indexes are -256, -255, -254, -253, -252, -251, -250, -249, -248, -247, -246, -245, -2, -1, 0, 1, 2, 245, 246, 247, 248, 249, 250, 251, 252, 253, 254, and 255 are successively -1, 1, -1, -1, 1, -1, -1, -1, -1, -1, 1, 1, -1, -1, -1, 1, 1, -1, -1, -1, 1, -1, -1, -1, -1, -1, 1, and 1; or
in the signals of the LTF, signal values whose indexes are -512, -511, -510, -509, -508, - 507, -506, -505, -504, -503, -502, -501, -2, -1, 0, 1, 2, 501, 502, 503, 504, 505, 506, 507, 508, 509, 510, and 511 are successively 1, 1, 1, -1, -1, -1, -1, 1, 1, 1, 1, -1, -1, -1, 1, -1, -1, -1, -1, 1, -1, 1, 1, -1, 1, 1, -1, and -1.

14. The method according to claim 12 or 13, wherein the demodulating the first PPDU based on the first carrier spacing comprises:

converting the first PPDU from an analog signal into a digital signal based on the first carrier spacing;
converting a signal of a data field in the first PPDU from a time domain signal into a frequency domain signal;
performing equalization processing on the signal of the data field in the first PPDU;
converting, a signal, obtained through equalization processing, of the data field in the first PPDU from a frequency domain signal into a time domain signal; and
processing a pilot signal of the data field in the first PPDU.

15. The method according to claim 9 or 10, wherein
the first carrier spacing is determined in the following manner:

determining a high-frequency effective bandwidth in a channel bandwidth of the first high-frequency channel, wherein the high-frequency effective bandwidth comprises a bandwidth corresponding to a data subcarrier, a bandwidth corresponding to a pilot subcarrier, and a bandwidth corresponding to a direct current subcarrier; and
determining the first carrier spacing based on the high-frequency effective bandwidth and a quantity of effective subcarriers corresponding to a channel bandwidth of the first low-frequency channel.

16. The method according to claim 11, wherein
the first carrier spacing is determined in the following manner:

determining, based on a channel bandwidth of the first high-frequency channel and a channel bandwidth of the first low-frequency channel, a sample rate of a signal carried on the first high-frequency channel, wherein the sample rate is M times a minimum sample rate of a signal carried on the first low-frequency channel, and M is a positive integer greater than 1; and
determining the first carrier spacing based on the sample rate and a discrete Fourier transform DFT size of the first PPDU.

17. The method according to claim 16, wherein the determining, based on a channel bandwidth of the first high-frequency channel and a channel bandwidth of the first low-frequency channel, a sample rate of a signal carried on the first high-frequency channel comprises:

determining a high-frequency effective bandwidth in the channel bandwidth of the first high-frequency channel, wherein the high-frequency effective bandwidth comprises a bandwidth corresponding to a data subcarrier, a bandwidth corresponding to a pilot subcarrier, and a bandwidth corresponding to a direct current subcarrier; and
determining, based on the high-frequency effective bandwidth, a quantity of effective subcarriers corresponding to the channel bandwidth of the first low-frequency channel, and the DFT size of the first PPDU, the sample rate of the signal carried on the first high-frequency channel.

18. A transmit device, comprising an obtaining module, a modulation module, and a sending module, wherein

the obtaining module is configured to obtain a first carrier spacing, wherein the first carrier spacing is N times a second carrier spacing corresponding to a first low-frequency channel, and N>1;
the modulation module is configured to modulate a to-be-sent high-frequency physical layer signal based on the first carrier spacing, to generate a first physical layer protocol data unit PPDU; and
the sending module is configured to send the first PPDU to a receive device through a first high-frequency channel.

19. The transmit device according to claim 18, wherein the transmit device further comprises a control module, wherein the control module is configured to control the modulation module to: in a process of modulating the high-frequency physical layer signal based on the first carrier spacing, for data part processing, skip performing inverse discrete Fourier transform IDFT on the high-frequency physical layer signal, and set signal values carried on a direct current subcarrier and a guard subcarrier in a signal of a long training field LTF in the first PPDU to non-zero values.

20. A receive device, comprising an obtaining module, a receiving module, and a demodulation module, wherein

the obtaining module is configured to obtain a first carrier spacing, wherein the first carrier spacing is N times a

EP 4 496 372 A1

second carrier spacing corresponding to a first low-frequency channel, and N> 1;
the receiving module is configured to receive a first physical layer protocol data unit PPDU from a transmit device through a first high-frequency channel, wherein the first PPDU is a high-frequency physical layer signal; and
the demodulation module is configured to demodulate the first PPDU based on the first carrier spacing.

21. The receive device according to claim 20, wherein
the demodulation module is specifically configured to: convert the first PPDU from an analog signal into a digital signal based on the first carrier spacing; convert a signal of a data field in the first PPDU from a time domain signal into a frequency domain signal; perform equalization processing on the signal of the data field in the first PPDU; then convert a signal, obtained through equalization processing, of the data field in the first PPDU from a frequency domain signal into a time domain signal; and further process a pilot signal of the data field in the first PPDU.

22. A transmit device, comprising a memory and at least one processor connected to the memory, wherein the memory is configured to store instructions, and after the instructions are read by the at least one processor, the method according to any one of claims 1 to 8 is performed.

23. A receive device, comprising a memory and at least one processor connected to the memory, wherein the memory is configured to store instructions, and after the instructions are read by the at least one processor, the method according to any one of claims 9 to 17 is performed.

24. A computer-readable storage medium, wherein the computer-readable storage medium stores a computer program, and the computer program is executed by a processor to implement the method according to any one of claims 1 to 8.

25. A computer-readable storage medium, wherein the computer-readable storage medium stores a computer program, and the computer program is executed by a processor to implement the method according to any one of claims 9 to 17.

26. A communication system, comprising the transmit device according to claim 18 or 19 and the receive device according to claim 20 or 21, or comprising the transmit device according to claim 22 and the receive device according to claim 23.

| L-STF | L-LTF | L-SIG | HT-SIG | HT-STF | HT-LTF | Data DATA |
|---|---|---|---|---|---|---|

Pre-HT modulated field      HT modulated field

(a)

| L-STF | L-LTF | L-SIG | VHT-SIG-A | VHT-STF | VHT-LTF | VHT-SIG-B | Data DATA |
|---|---|---|---|---|---|---|---|

Pre-VHT modulated field      VHT modulated field

(b)

| L-STF | L-LTF | L-SIG | RL-SIG | HE-SIG-A | HE-SIG-B | HE-STF | HE-LTF | Data DATA |
|---|---|---|---|---|---|---|---|---|

Pre-HE modulated field      HE modulated field

(c)

| L-STF | L-LTF | L-SIG | RL-SIG | U-SIG SYM | ETH-SIG | ETH-STF | ETH-LTF | Data DATA |
|---|---|---|---|---|---|---|---|---|

Legacy preamble      Extremely high throughput preamble      PSDU

(d)

| STF | CEF | SIG | SC-DATA |
|---|---|---|---|

(e)

| L-STF | L-CEF | L-Header (L-Header) | EDMG-Header-A (EDMG-Header-A) | EDMG-STF | EDMG-CEF | EDMG-Header-B (EDMG-Header-B) | Data DATA | TRN |
|---|---|---|---|---|---|---|---|---|

(f)

FIG. 1

FIG. 2

FIG. 3

**Transmit device**

**Step 401:**
Obtain a first carrier spacing, where the first carrier spacing is N times a second carrier spacing, and N>1

To-be-sent high-frequency physical layer signal

**Step 402:**
Perform modulation to generate a first PPDU

**Step 403:**
Send the first PPDU

**Receive device**

**Step 404:**
Obtain the first carrier spacing, where the first carrier spacing is N times the second carrier spacing, and N>1

**Step 405:**
Perform demodulation to obtain the high-frequency physical layer signal

FIG. 4

Determine a high-frequency effective bandwidth in a channel bandwidth of a first high-frequency channel — 501

Determine a first carrier spacing based on the high-frequency effective bandwidth and a quantity of effective subcarriers corresponding to a channel bandwidth of a first low-frequency channel — 502

FIG. 5

Determine, based on a channel bandwidth of a first high-frequency channel and a channel bandwidth of a first low-frequency channel, a sample rate of a signal carried on the first high-frequency channel

6011

Determine a high-frequency effective bandwidth in the channel bandwidth of the first high-frequency channel

601

6012

Determine, based on the high-frequency effective bandwidth, a quantity of effective subcarriers corresponding to the channel bandwidth of the first low-frequency channel, and a DFT size of a first PPDU, the sample rate of the signal carried on the first high-frequency channel

Determine a first carrier spacing based on the sample rate and the discrete Fourier transform DFT size of the first PPDU

602

FIG. 6



FIG. 7

EP 4 496 372 A1

**Transmit device**

Information bit → Channel encoding and digital modulation → Pilot insertion → Serial-to-parallel conversion → Cyclic prefix insertion and windowing → Parallel-to-serial conversion → Digital-to-analog conversion → Radio frequency transmitting

Modulated signal

OFDM signal

First PPDU

Channel

**Receive device**

Information bit ← Digital demodulation and channel decoding ← Parallel-to-serial conversion ← Pilot signal processing ← IDFT ← Channel equalization ← DFT ← Cyclic prefix removal ← Serial-to-parallel conversion ← Analog-to-digital conversion ← Radio frequency receiving

Modulated signal

OFDM signal

FIG. 8

Transmit device

Obtaining module 901

Modulation module 902

Sending module 903

Control module 904

FIG. 9

Transmit device

Processing module 1001

Communication module 1002

Storage module 1003

FIG. 10

Receive device

Obtaining module 1101

Receiving module 1102

Demodulation module 1103

FIG. 11

Receive device

Processing module 1201

Communication module 1202

Storage module 1203

FIG. 12

## INTERNATIONAL SEARCH REPORT

International application No.

**PCT/CN2023/086653**

### A. CLASSIFICATION OF SUBJECT MATTER

H04W 24/02(2009.01)i

According to International Patent Classification (IPC) or to both national classification and IPC

### B. FIELDS SEARCHED

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNABS; CNTXT; CNKI; VEN; ENTXTC; IEEE: 高频, 毫米波, 无线局域网, 载波间隔, 低频, 倍, 物理层协议数据单元, high frequency, mmWave, wlan, wifi, wi-fi, 802.11aj, 802.11ay, carrier spacing, subcarrier spacing, SCS, PPDU

### C. DOCUMENTS CONSIDERED TO BE RELEVANT

| Category* | Citation of document, with indication, where appropriate, of the relevant passages | Relevant to claim No. |
|---|---|---|
| A | US 2019097854 A1 (LG ELECTRONICS INC.) 28 March 2019 (2019-03-28) description, paragraphs [0084]-[0109] | 1-26 |
| A | CN 107925550 A (QUALCOMM INC.) 17 April 2018 (2018-04-17) entire document | 1-26 |
| A | US 2019068396 A1 (LG ELECTRONICS INC.) 28 February 2019 (2019-02-28) entire document | 1-26 |
| A | WO 2019132390 A1 (LG ELECTRONICS INC.) 04 July 2019 (2019-07-04) entire document | 1-26 |

☐ Further documents are listed in the continuation of Box C. ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **28 June 2023** | **24 July 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/086653**

| Patent document cited in search report | | | Publication date (day/month/year) | Patent family member(s) | | | Publication date (day/month/year) |
|---|---|---|---|---|---|---|---|
| US | 2019097854 | A1 | 28 March 2019 | WO | 2017155330 | A1 | 14 September 2017 |
| | | | | US | 10623220 | B2 | 14 April 2020 |
| CN | 107925550 | A | 17 April 2018 | JP | 2020039132 | A | 12 March 2020 |
| | | | | JP | 6833946 | B2 | 24 February 2021 |
| | | | | KR | 20180049825 | A | 11 May 2018 |
| | | | | KR | 102023178 | B1 | 19 September 2019 |
| | | | | EP | 3345329 | A1 | 11 July 2018 |
| | | | | EP | 3345329 | B1 | 09 January 2019 |
| | | | | ES | 2719715 | T3 | 12 July 2019 |
| | | | | JP | 2018527833 | A | 20 September 2018 |
| | | | | JP | 6746690 | B2 | 26 August 2020 |
| | | | | US | 2017070995 | A1 | 09 March 2017 |
| | | | | US | 10244531 | B2 | 26 March 2019 |
| | | | | WO | 2017040337 | A1 | 09 March 2017 |
| | | | | BR | 112018004332 | A2 | 14 May 2019 |
| US | 2019068396 | A1 | 28 February 2019 | WO | 2017155329 | A2 | 14 September 2017 |
| | | | | WO | 2017155329 | A3 | 07 September 2018 |
| | | | | US | 10721091 | B2 | 21 July 2020 |
| WO | 2019132390 | A1 | 04 July 2019 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210366508